# EUROPÄISCHE PATENTSCHRIFT

(11) **EP 2 196 699 B1**
(45) Veröffentlichungstag und Bekanntmachung des Hinweises auf die Patenterteilung: **20.02.2013**
(21) Anmeldenummer: 09177998.3
(22) Anmeldetag: 04.12.2009
(51) Int. Cl.: F16H 25/20, H02K 7/116, H02K 7/108, E05F 15/12, H02K 7/06

(54) **Spindelaktor**
Spindle actuator
Actionneur d'axe

(30) Priorität: 09.12.2008 DE 102008061120
(43) Veröffentlichungstag der Anmeldung: 16.06.2010
(73) Patentinhaber: SUSPA GmbH, 90518 Altdorf (DE)
(72) Erfinder: Preis, Johannes, 93077 Bad Abbach/Lengfeld (DE); Happich, Markus, 90537 Feucht-Moosbach (DE)
(74) Vertreter: Rau, Albrecht

(56) Entgegenhaltungen:
- DE-A1-102006 042 023
- DE-B3- 10 254 081
- DE-U1- 29 917 213

## Beschreibung

Die Erfindung betrifft ein längenverstellbares Betätigungselement.

Es gibt zahlreiche Anwendungsfälle, bei denen längenverstellbare Betätigungselemente benötigt werden, deren eines Ende festgehalten wird, während deren anderes Ende relativ zum ersten Ende beweglich ist, um irgendwelche beweglichen Teile gegeneinander zu verstellen. Ein derartiges längenverstellbares Betätigungselement ist bekannt aus der DE 10 2006 042 023 A1. Das Dokument DE 102006042023 A1 offenbart alle Merkmale des Oberbegriffs des Anspruchs 1. Weitere längenverstellbare Betätigungselemente sind bekannt aus der DE 102 54 081 B3 und aus der DE 299 17 213 U1. Beispiele hierfür sind die Verstellung von Kofferraum-Deckeln in Kraftfahrzeugen, die Verstellung von Deckeln über Laderäumen oder höhenverstellbare Tisch- oder Arbeitsplatten. Als Antrieb für derartige Betätigungselemente dient in der Regel ein Elektromotor, welcher üblicherweise in einem separaten Gehäuse gelagert ist. Durch das zusätzlich zum Gehäuse des Betätigungselements benötigte Motor-Gehäuse wird zusätzlicher Bauraum benötigt und entstehen Mehrkosten.

Es ist daher eine Aufgabe der vorliegenden Erfindung, ein längenverstellbares Betätigungselement zu verbessern. Diese Aufgabe wird durch die Merkmale des Anspruches 1 gelöst. Der Kern der Erfindung besteht darin, die Antriebs-Einrichtung als tragendes Element auszubilden. Das Gehäuse des Betätigungselements muss daher keine tragende Funktion übernehmen.

Gemäß der Erfindung hat das Motor-Gehäuse selbsttragende Funktion. Es kann die eingeleiteten Kräfte direkt übertragen.

Ein zusätzliches Außenrohr kann entfallen. Hierdurch werden Gewicht, Materialkosten und Bauraum eingespart.

Weitere Vorteile ergeben sich aus den Unteransprüchen. Merkmale und Einzelheiten der Erfindung ergeben sich aus der Beschreibung mehrerer Ausführungsbeispiele anhand der Zeichnungen. Es zeigen:
- Fig. 1: eine schematische Gesamt-Ansicht eines Betätigungselements gemäß einem ersten Ausführungsbeispiel im eingefahrenen Zustand,
- Fig. 2: eine schematische Gesamt-Ansicht des Betätigungselements gemäß Fig. 1 im ausgefahrenen Zustand,
- Fig. 3: eine Schnitt-Darstellung des Betätigungselements gemäß Fig. 1,
- Fig. 4: eine Schnitt-Darstellung des Betätigungselements gemäß Fig. 2,
- Fig. 5: eine Detail-Ansicht des Betätigungselements gemäß Fig. 3 im Bereich der Überlast-Kupplung in einer ersten, drehmoment-übertragenden Konfiguration,
- Fig. 6: eine Darstellung gemäß Fig. 5 in einer zweiten, entkuppelten Konfiguration,
- Fig. 7: eine Darstellung gemäß Fig. 5 in einer dritten, entkuppelten Konfiguration,
- Fig. 8 bis 10: Detail-Ansichten des Betätigungs-Elements gemäß den Fig. 1 bis 4 im Bereich der Entkopplungs-Einrichtung,
- Fig. 11: eine Schnitt-Darstellung des Ausführungsbeispiels gemäß Fig. 8 entlang der Linie XI-XI,
- Fig. 12: eine Detail-Ansicht des Betätigungselements gemäß den Fig. 1 bis 4 im Bereich der Brems-Einrichtung,
- Fig. 13: eine Detail-Ansicht des Betätigungselements gemäß den Fig. 1 bis 4 im Bereich der Antriebs-Einrichtung,
- Fig. 14: eine Detail-Ansicht des Betätigungselements gemäß den Fig. 1 bis 4 im Bereich des Sensor-Elements,
- Fig. 15 bis 17: Detail-Ansichten entsprechend den Fig. 5 bis 7 eines zweiten Ausführungsbeispiels der Erfindung,
- Fig. 18: eine Detail-Ansicht entsprechend Fig. 5 eines dritten Ausführungsbeispiels der Erfindung,
- Fig. 19 bis 21: Detail-Ansichten entsprechend den Fig. 5 bis 7 eines vierten Ausführungsbeispiels der Erfindung,
- Fig. 22: eine Detail-Ansicht entsprechend Fig. 13 einer Alternative zum ersten Ausführungsbeispiel der Erfindung,
- Fig. 23: eine Detail-Ansicht entsprechend Fig. 13 eines fünften Ausführungsbeispiels der Erfindung,
- Fig. 24 und 25: Darstellungen entsprechend den Fig. 3 und 4 eines sechsten Ausführungsbeispiels der Erfindung,
- Fig. 26 und 27: Darstellungen entsprechend den Fig. 3 und 4 eines siebten Ausführungsbeispiels der Erfindung
- Fig. 28 und 29: Darstellungen entsprechend den Fig. 3 und 4 eines achten Ausführungsbeispiels der Erfindung
- Fig. 30 und 31: Darstellungen entsprechend den Fig. 3 und 4 eines neunten Ausführungsbeispiels der Erfindung und
- Fig. 32: eine Detail-Ansicht entsprechend Fig. 12 einer Alternative zum ersten Ausführungsbeispiel der Erfindung.

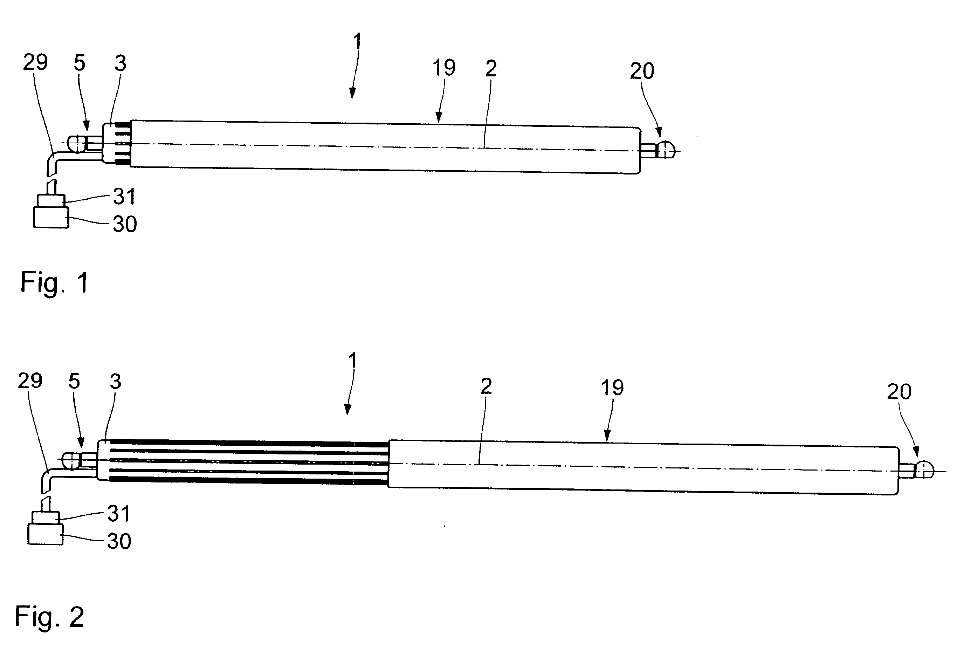

Im Folgenden wird unter Bezugnahme auf die Fig. 1 bis 13 ein erstes Ausführungsbeispiel der Erfindung beschrieben. Ein längenverstellbares Betätigungselement 1 weist ein sich entlang einer Längsachse 2 erstreckendes Gehäuse 3 auf, an dessen mittels eines Bodens 4 verschlossenem Ende ein erstes Befestigungselement 5 angebracht ist. Das Gehäuse 3 ist als Kunststoffrohr ausgebildet. Es dient der Führung des Betätigungselements 1 und ermöglicht eine ansprechende Optik desselben. Der Boden 4 ist vorzugsweise aus Stahl. Er ist von einer umlaufenden Sicke 6 an der Antriebs-Einrichtung 8 gehalten. Die Ausrichtung der Längsachse 2 wird im Folgenden als Längsrichtung oder auch als Axialrichtung bezeichnet.

Im Anschluss an den Boden 4 und an diesem mechanisch angebunden ist im Gehäuse 3 eine als Elektromotor 7 ausgebildete Antriebs-Einrichtung 8 angeordnet. Die Antriebs-Einrichtung 8 ist drehfest im Gehäuse 3 verankert. Hierzu können im Gehäuse 3 Führungsrippen, welche sich in Richtung der Längsachse 2 erstrecken, vorgesehen sein. Die Antriebs-Einrichtung 8 ist auch in Richtung der Längsachse 2, d. h. in axialer Richtung, fest mit dem Gehäuse 3 des Betätigungselements 1 verbunden. Die Antriebs-Einrichtung 8 ist über ein in den Figuren nur schematisch dargestelltes Getriebe 9 an eine Antriebs-Welle 10 gekoppelt. Die Antriebs-Welle ist um die Längsachse 2 mittels der Antriebs-Einrichtung 8 drehantreibbar.

Die Abtriebs-Welle 10 ist in drehmomentübertragender Weise mit einer Entkopplungs-Einrichtung 11 verbunden. Die Entkopplungs-Einrichtung 11 wiederum ist in drehmomentübertragender Weise an eine Brems-Einrichtung 12 gekoppelt. Diese ist ihrerseits in drehmomentübertragender Weise mit einer Überlast-Kupplung 13 verbunden. Schließlich ist die Überlast-Kupplung 13 in drehmomentübertragender Weise an eine Gewinde-Spindel 14 gekoppelt, welche ein Außengewinde 15 aufweist, auf welchem eine Spindel-Mutter 16 mit einem zum Außengewinde 15 passenden Innengewinde 17 gelagert ist. Die Gewinde-Spindel 14 bildet zusammen mit der Spindel-Mutter 16 einen Spindel-Trieb 18. Die Spindel-Mutter 16 ist in axialer Richtung, das heißt in Richtung der Längsachse 2, fest mit einem Verstell-Element 19 verbunden. Die Spindel-Mutter 16 ist radial mit einer formschlüssigen Anbindung, die über Lagerstellen mit dem Gehäuse 3 verbunden ist, gegen eine Verdrehung bezüglich der Längsachse 2 gesichert. Die Anbindung ist beispielsweise als Mehrkantrohr, insbesondere als Sechskantrohr ausgebildet. Somit ist das Verstell-Element 19 drehfest mit dem Gehäuse 3 verbunden. Das heißt, das Gehäuse 3 und das Verstell-Element 19 lassen sich nicht gegeneinander verdrehen. Das Verstell-Element 19 ist jedoch in Axialrichtung vom Spindel-Trieb 18 verschiebbar mit dem Gehäuse 3 verbunden. An dem Verstell-Element 19 ist endseitig ein dem ersten Befestigungselement 5 in Richtung der Längsachse 2 gegenüberliegendes zweites Befestigungselement 20 angeordnet. Bezüglich der Details des Spindel-Triebs 18 sei auf die DE 103 30 176 A1 verwiesen.

Die Antriebs-Einrichtung 8 ist somit über das Getriebe 9, die Antriebs-Welle 10, die Entkopplungs-Einrichtung 11, die Brems-Einrichtung 12 und die Überlast-Kupplung 13 an den die Gewinde-Spindel 14 und die Spindel-Mutter 16 umfassenden Spindel-Trieb 18 gekoppelt. Mittels der Antriebs-Einrichtung 8 ist das Verstell-Element 19 in Richtung der Längsachse 2 gegenüber dem Gehäuse 3 verschiebbar. Somit sind die Befestigungselemente 5, 20 mittels des Betätigungselements 1 entlang der Längsachse 2 zueinander verschiebbar. Zwischen dem Verstell-Element 19 und dem Boden 4 des Gehäuses 3 ist ein Sensor 21 angeordnet.

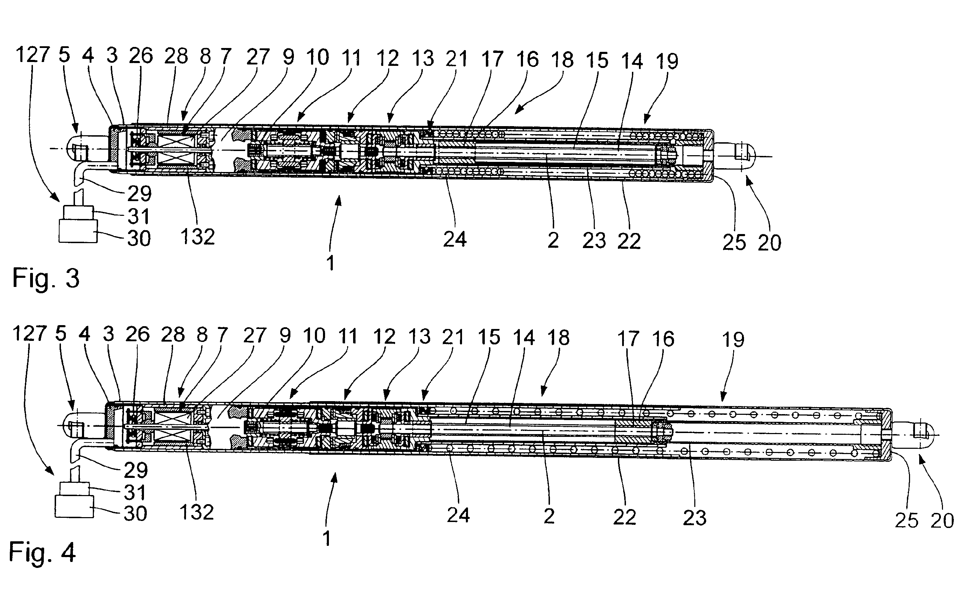

Die Antriebs-Einrichtung 8, das Getriebe 9, die Entkopplungs-Einrichtung 11, die Brems-Einrichtung 12, die Überlast-Kupplung 13 und der Sensor 21 sind innerhalb des Gehäuses 3 angeordnet. Sie sind somit durch das Gehäuse 3 gegen Einwirkungen von außen geschützt. Das Gehäuse 3 kann insbesondere gekapselt ausgebildet sein. In einer vorteilhaften Ausführungsform ist das Gehäuse 3 staubdicht verschlossen. Es kann vorzugsweise auch flüssigkeitsdicht und/oder gasdicht nach außen abgeschlossen sein. Gemäß dem ersten Ausführungsbeispiel der Erfindung umfasst das Betätigungselement 1 die Antriebs-Einrichtung 8, die Entkopplungs-Einrichtung 11, die Brems-Einrichtung 12, die Überlast-Kupplung 13 und den Sensor 21. Es ist jedoch erfindungsgemäß vorgesehen, dass das Betätigungselement 1 nicht notwendigerweise alle vorgenannten konstruktiven Elemente aufweist. Es sind insbesondere Ausführungsformen mit unterschiedlichen Kombinationen der vorgenannten Elemente denkbar. Die Entkopplungs-Einrichtung 11, die Brems-Einrichtung 12 und die Überlast-Kupplung 13 können insbesondere auch in einer von der in den Fig. 3 und 4 dargestellten abweichenden Reihenfolge entlang der Längsachse 2 zueinander angeordnet sein.

Das Verstell-Element 19 ist doppelrohrförmig ausgebildet. Es weist ein Außenrohr 22 und ein Innenrohr 23 auf. Das Außenrohr 22 ist konzentrisch zum Innenrohr 23 angeordnet. Das Innenrohr 23 ist axial fest mit der Spindel-Mutter 16 verbunden. Das Gehäuse 3 bildet mit dem Außenrohr 22 ein Führungssystem. Gemäß den in den Figuren dargestellten Ausführungsbeispielen stellt das Gehäuse 3 ein inneres Führungsrohr und das Außenrohr 22 ein äußeres Führungsrohr dar. Dies muss nicht zwangsläufig so sein und kann ja nach Anordnung auch umgedreht sein. Dann wäre das Gehäuse 3 das äußere und das Außenrohr 22 das innere Führungsrohr.

Zur Unterstützung eines Ausschiebevorgangs des Betätigungselements 1 ist eine Schraubendruckfeder 24 vorgesehen. Die Schraubendruckfeder 24 ist im eingefahrenen Zustand des Betätigungselements 1, wie beispielsweise in den Fig. 1 und 3 dargestellt, vorgespannt. Sie bildet ein EnergiespeicherElement mit einer bekannten Weg-Kraft-Charakteristik. Die Schraubendruckfeder 24 ist vorteilhafterweise zwischen dem Innenrohr 23 und dem Außenrohr 22 des Verstell-Elements 19 angeordnet. Durch diese Anordnung ist die Schraubendruckfeder 24 geführt und gegen ein Ausknicken geschützt. Sie ist an einem ersten Ende an einem Deckel 25 des Betätigungselements 1 abgestützt. Der Deckel 25 ist in Axialrichtung fest mit dem Verstell-Element 19 verbunden. Er ist an dem Boden 4 bezüglich der Längsachse 2 entgegengesetzten Ende des Betätigungselements 1 angeordnet. An ihrem zweiten Ende ist die Schraubendruckfeder 24 gegen das Gehäuse 3 abgestützt. Hierbei ist zwischen der Schraubendruckfeder 24 und dem Gehäuse 3 der Sensor 21 angeordnet.

Die vom Betätigungselement 1 zu bewegende Last wird kräftemäßig durch die von der Schraubendruckfeder 24 auf das Verstell-Element 19 ausgeübte Kraft zumindest teilweise ausgeglichen. Die Schraubendruckfeder 24 ist zur Anpassung des Betätigungselements 1 an die zu erwartenden Lasten anpassbar. Sie ist insbesondere austauschbar. Aufgrund der zumindest teilweisen Kompensation der zu bewegenden Last durch die Schraubendruckfeder 24 wird der Elektromotor 7 entlastet. Er kann daher im Verhältnis zur zu bewegenden Last relativ leistungsschwach ausgelegt sein.

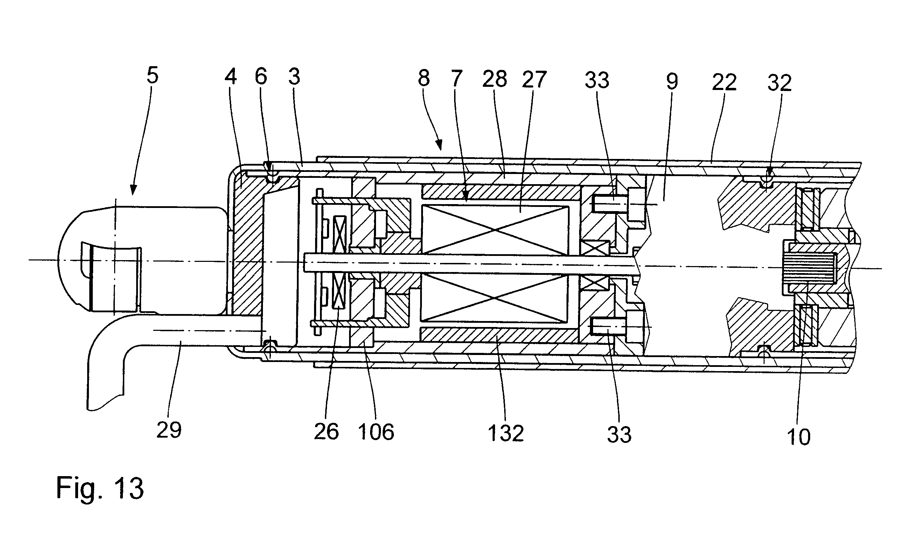

Im Folgenden wird unter Bezugnahme auf die Figur 13 die Antriebs-Einrichtung 8 des Betätigungselements 1 näher beschrieben. Die Antriebs-Einrichtung 8 umfasst einen Drehzahl-Aufnehmer 26, ein in einem Motorpolrohr 28 befestigtes Motoranschluß-Lagerschild 106, den Elektro-Motor 7 mit einem Motoranker 27 und ein Getriebe 9. In dieser Erfindung hat das Gehäuse 3 keine tragende Funktion. Es umhüllt das Motorpolrohr 28, dient der Führung des Gesamtsystems und sorgt für eine ansprechende Optik desselben. Im Motorpolrohr 28 sind zwei oder mehr Dauermagneten 132 befestigt, insbesondere verklebt. Das Motorpolrohr 28 ist vorzugsweise aus Metall und wirkt selbst als tragendes Element. Die Anbindung zur Krafteinleitung ist direkt am Motorpolrohr 28 befestigt. Das Motorpolrohr 28 steht in Längsrichtung über ein am Elektromotor 7 angeordnetes Motoranschluss-Lagerschild 106 über. Der Elektromotor 7 ist somit im Gehäuse 3 integriert. Hierdurch werden Gewicht, Bauraum und Kosten eingespart.

Der Elektromotor 7 ist über eine Zuleitung 29 mit Energie versorgbar. Die Zuleitung 29 ist durch den Boden 4 aus dem Gehäuse 3 herausgeführt. Vorzugsweise ist die Zuleitung 29 abgedichtet durch den Boden 4 hindurchgeführt. Die Zuleitung 29 umfasst mindestens eine, insbesondere zwei Energie-Versorgungs-Leitungen, welche über eine Steckerverbindung 127 mit einer Energie-Versorgungs-Einrichtung 30 in energieübertragender Weise verbunden sind. Dadurch ist die Energieversorgung des Elektromotors 7 über die Zuleitung 29 und der Steckverbindung 127, mittels einer Steuer-Einrichtung 31 regelbar. Der Elektromotor 7 ist in zwei, einander entgegengesetzte Drehrichtungen betätigbar. Zusätzlich umfasst die Zuleitung 29 weitere Leitungen, welche den Drehzahl-Aufnehmer 26 in datenübertragender Weise mit der Steuer-Einrichtung 31 verbinden.

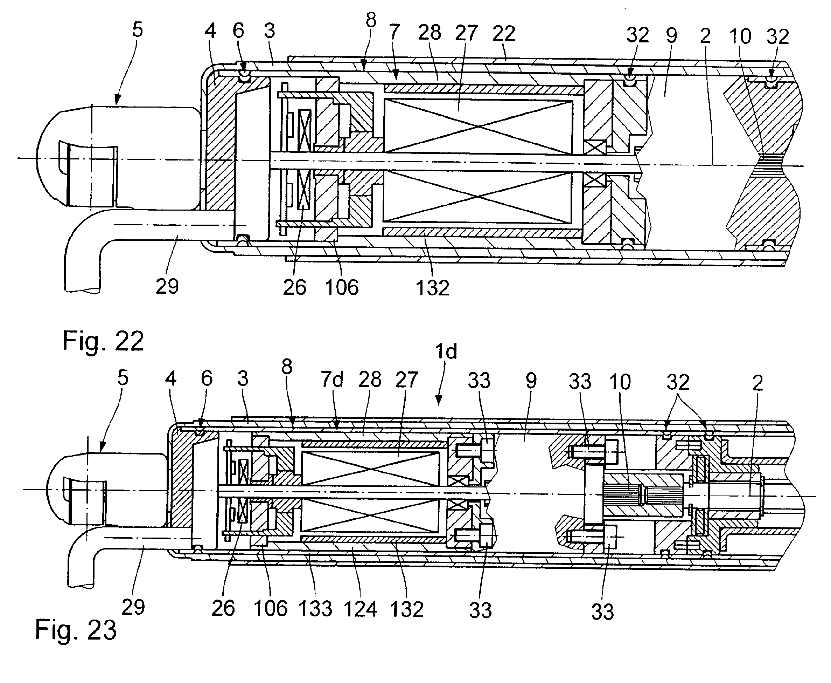

Das Getriebe 9 ist als Untersetzungsgetriebe ausgebildet. Dies ermöglicht ein hohes auf die Antriebs-Welle 10 übertragbares Drehmoment selbst bei vergleichsweise niedrigem Motordrehmoment. Das Getriebe 9 ist sowohl in Axialrichtung als auch in Radialrichtung fest mit dem Elektromotor 7 verbunden. Es ist insbesondere mittels einer mechanischen oder thermischen Verbindung 32 in Axialrichtung im Gehäuse 3 festgelegt. Diese mechanische oder thermische Verbindung 32 kann beispielsweise als Sicke, Zwickung oder thermische Schweißverbindung ausgeführt sein. Sie ist vorzugsweise im Bereich des abtriebsseitigen Endes des Getriebes 9 angeordnet. Zur radialen Fixierung des Getriebes 9 gegenüber dem Elektromotor 7 sind exzentrisch zur Längsachse 2 angeordnete Verbindungs-Elemente 33 vorgesehen. Bei den Verbindungs-Elementen 33 kann es sich beispielsweise um Schrauben oder Stifte handeln. Alternativ hierzu, kann das Getriebe 9 auch mittels einer formschlüssigen, verzahnten Verbindung mit dem Elektromotor 7 verbunden sein. Gemäß einer weiteren Alternative, kann, wie in Figur 22 dargestellt, zur Fixierung des Elektromotors 7 und/oder des Getriebes 9 in Axialrichtung eine weitere mechanische oder thermische Verbindung 32 vorgesehen sein, welche insbesondere ebenfalls als Sicke, Zwickung oder thermische Schweißverbindung ausgebildet ist. Diese Ausführungsform ist vorteilhaft, wenn auf das Getriebe 9 verzichtet werden kann.

Zur Übertragung eines Drehmoments von der Antriebs-Welle 10 auf die abtriebsseitig angeordneten Elemente des Betätigungselements 1 weist die Antriebs-Welle 10 einen unrunden Querschnitt auf. Die Antriebs-Welle 10 weist vorzugsweise einen geriffelten Querschnitt auf. Sie kann auch sternförmig, oval oder polygonal, insbesondere drei-, vier- oder sechskantig ausgebildet sein.

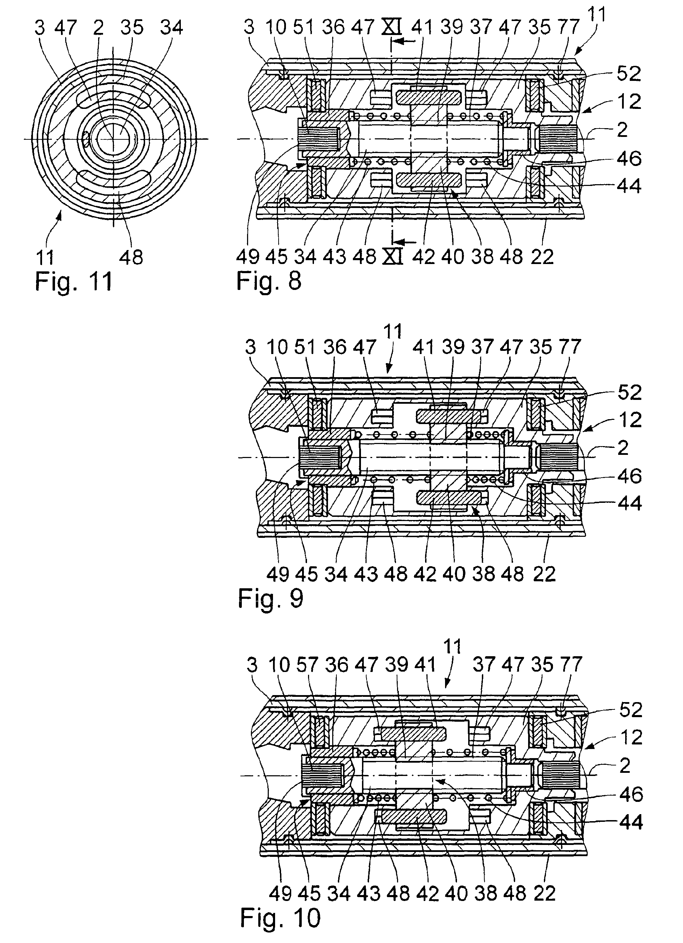

Im Folgenden wird unter Bezugnahme auf die Figuren 8 bis 11 die Entkopplungs-Einrichtung 11 genauer beschrieben. Die Entkopplungs-Einrichtung 11 umfasst zwei Entkopplungs-Elemente 34, 35, welche bezüglich einer Drehung um die Längsachse 2 voneinander entkoppelbar sind. Das erste Entkopplungs-Element 34 ist in drehmomentübertragender Weise, vorzugsweise starr, mit der Antriebs-Welle 10 verbunden. Zur drehmomentübertragenden Verbindung zwischen dem ersten Entkopplungs-Element 34 und der Antriebs-Welle 10 ist eine kraftschlüssige Verbindung 49vorgesehen. Das erste Entkopplungs-Element 34 ist mittels zweier Radial-Lager 45, 46 im Gehäuse 3 gelagert.

Allgemeiner ausgedrückt ist das erste Entkopplungs-Element 34 antriebsseitig in drehmoment-übertragender Weise, vorzugsweise starr, direkt oder indirekt mit der Antriebs-Einrichtung 8 verbunden. Zur Verbindung des ersten Entkopplungs-Elements 34 mit der Antriebs-Welle 10 ist eine Verbindungshülse 36 vorgesehen. Zur besseren Übertragbarkeit von Drehmomenten kann das erste Entkopplungs-Element 34 einen unrunden, insbesondere einen geriffelten, sternförmigen oder polygonalen, vorzugsweise drei-, vier- oder sechs-kantigen Querschnitt aufweisen. Der Querschnitt des ersten Entkopplungs-Elements 34 entspricht vorteilhafterweise dem Querschnitt der Antriebs-Welle 10. Alternativ hierzu ist das erste Entkopplungs-Element 34 formschlüssig, beispielsweise durch eine Steckverbindung, mit der Antriebs-Welle 10 verbindbar.

Das erste Entkopplungs-Element 34 ist als Entkopplungs-Spindel mit einem ersten Gewinde 37 ausgebildet. Beim ersten Gewinde 37 handelt es sich um ein Außengewinde. Das Gewinde 37 des ersten Entkopplungs-Elements 34 hat eine große Gewindesteigung und ist nicht-selbsthemmend.

Auf dem ersten Gewinde 37 des ersten Entkopplungs-Elements 34 ist ein Kuppel-Element 38 angeordnet. Das Kuppel-Element 38 weist ein zum ersten Gewinde 37 passendes zweites Gewinde 39 auf. Beim zweiten Gewinde 39 handelt es sich um ein Innengewinde. Das Kuppel-Element 38 umfasst einen als Spindel-Mutter ausgebildeten Verschiebe-Schlitten 40, welcher fest mit zwei Mitnahme-Elementen 41, 42 verbunden ist. Der Verschiebe-Schlitten 40 ist um die Längsachse 2 drehbar im Gehäuse 3 gelagert. Er ist außerdem relativ zum ersten Entkopplungs-Element 34 verdrehbar. Er weißt hierfür ein ausreichend großes Trägheitsmoment auf. Durch eine relative Rotation des ersten Entkopplungs-Elements 34 gegenüber dem Verschiebe-Schlitten 40 ist letzterer aufgrund der beiden Gewinde 37, 39 in Axialrichtung auf dem ersten Entkopplungs-Element 34 verschiebbar gelagert. In Axialrichtung ist auf beiden Seiten des Verschiebe-Schlittens 40 jeweils ein als Schraubendruckfeder 43, 44 ausgebildetes Federungs- und/oder Rückstell-Element angeordnet. Die Schraubendruckfedern 43, 44 sind jeweils an einem ersten Ende am ersten Entkopplungs-Element 34 und am gegenüberliegenden Ende am Verschiebe-Schlitten 40 abgestützt ist. Die Schraubendruckfedern 43, 44 sind vorgespannt. Da das erste Gewinde 37 nicht-selbsthemmend ausgebildet ist, nimmt der Verschiebe-Schlitten 40 in Ruhestellung, das heißt bei Abwesenheit von von der Antriebs-Einrichtung 8 ausgeübten Drehmomenten, aufgrund der Vorspannung der Schraubendruckfedern 43, 44 eine definierte, neutrale Lage ein. Diese ist in Fig. 8 dargestellt und wird im Folgenden als Mittelstellung bezeichnet.

Vorzugsweise ist die Entkopplungs-Einrichtung 11 symmetrisch in Bezug auf die Mittelstellung ausgebildet. Die Federn 43, 44 weisen insbesondere dieselben Federkräfte auf.

Die Mitnahme-Elemente 41, 42 sind als formstabile, gebogene Blättchen ausgebildet. Sie können auch als Bolzen ausgebildet sein. Sie weisen senkrecht zur Längsachse 2 einen kreisringbogenförmigen Querschnitt auf. Ihr Querschnitt ist in Axialrichtung, das heißt in Verschieberichtung des Verschiebe-Schlittens 40, konstant. Sie sind beispielsweise aus Metall oder Kunststoff.

Sofern sich das Kuppel-Element 38 in der Mittelstellung befindet, ist das erste Entkopplungs-Element 34 vom zweiten Entkopplungs-Element 35 bezüglich einer Drehung um die Längsachse 2 entkoppelt. Durch eine Auslenkung des Kuppel-Elements 38 aus der Mittelstellung sind die Mitnahme-Elemente 41, 42 mit jeweils dazu passenden Mitnahme-Konturen 47, 48 im als Kopplungs-Spindel ausgebildeten zweiten Entkopplungs-Element 35 in Eingriff bringbar. Die Mitnahme-Elemente 41, 42 sind insbesondere formschlüssig mit den Mitnahme-Konturen 47, 48 in Eingriff bringbar. Sie sind somit bezüglich einer Drehung um die Längsachse 2 spielfrei in den Mitnahme-Konturen 47, 48 anordenbar. Die Mitnahme-Elemente 41, 42 können für ein besseres Ineingriffbringen mit den Mitnahme-Konturen 47, 48 abgerundete oder abgeschrägte Ecken aufweisen.

Das zweite Entkopplungs-Element 35 ist mittels zweier Axial-Lager 51, 52 um die Längsachse 2 drehbar im Gehäuse 3 gelagert. Das zweite Entkopplungs-Element 35 ist abtriebsseitig in drehmomentübertragender Weise, vorzugsweise starr, mit der Brems-Einrichtung 12 verbunden. Anstelle der Brems-Einrichtung 12 kann sich abtriebsseitig an die Entkopplungs-Einrichtung 11 auch die Überlast-Kupplung 13 oder direkt der Spindel-Trieb 18 mit der Gewinde-Spindel 14 anschließen.

Anstelle der nicht-selbsthemmenden Verbindung zwischen dem ersten Entkopplungs-Element 34, und dem Kuppel-Element 38 mittels der Gewinde 37, 39 können diese Elemente 34, 38 auch über eine schiefe Ebene miteinander verbunden sein. Entscheidend ist, dass die Mitnahme-Elemente 41, 42 in der Mittelstellung außer Eingriff mit den Mitnahme-Konturen 47, 48 des zweiten Kopplungs-Elements 35 stehen und bei antriebsseitiger Ausübung eines Drehmoments auf das erste Entkopplungs-Element 34, insbesondere durch eine Verschiebung der Mitnahme-Elemente 41, 42 relativ zum Entkopplungs-Element 34 in Richtung der Längsachse 2, mit den Mitnahme-Konturen 47, 48 in Eingriff bringbar sind.

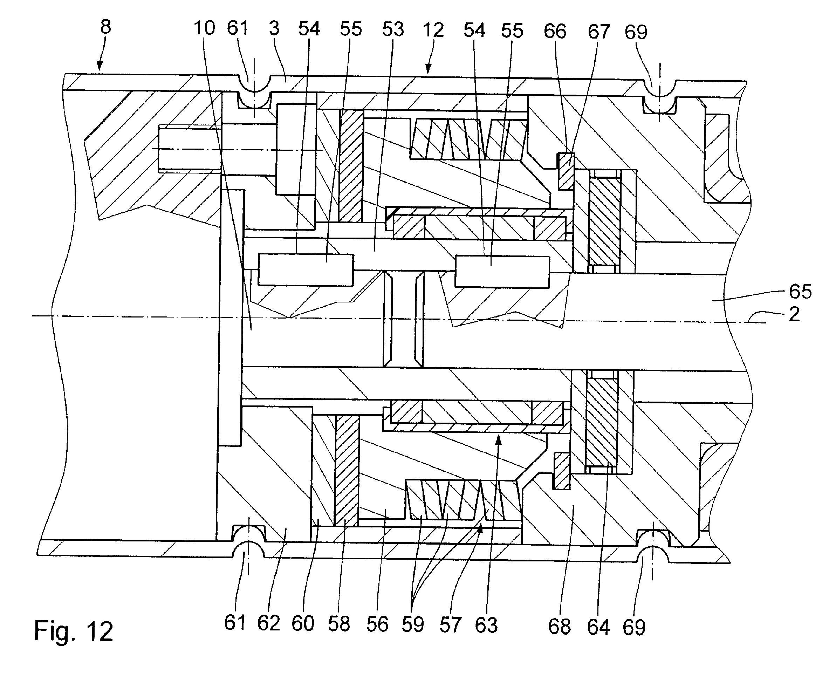

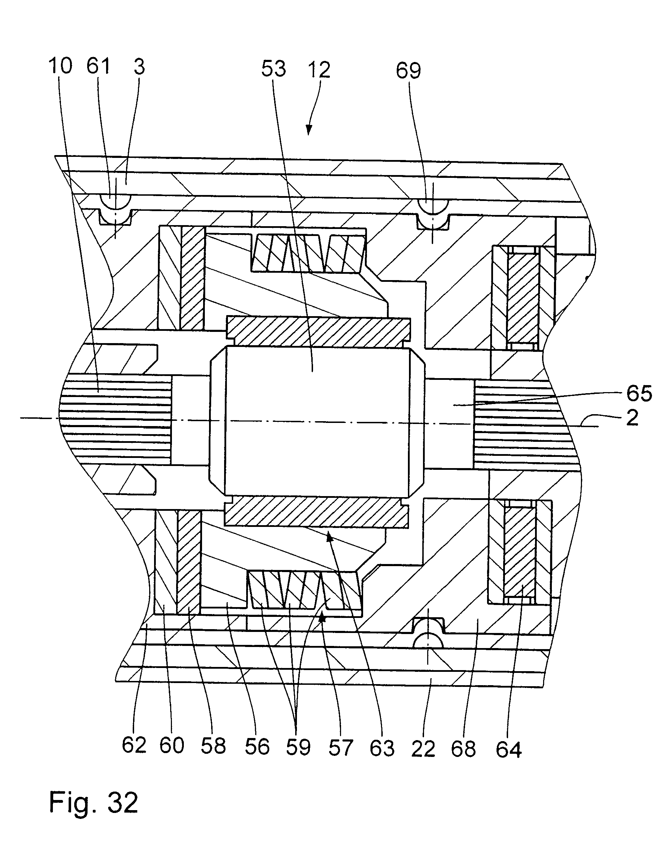

Im Folgenden wird unter Bezugnahme auf die Fig. 12 die Brems-Einrichtung 12 detailliert beschrieben. Die Brems-Einrichtung 12 ist über eine Hülse 53 mit einer in einer Passfedernut 54 gelagerten Passfeder 55 antriebsseitig in drehmomentübertragender Weise direkt oder indirekt mit der Antriebs-Einrichtung 8 verbunden. Anstatt dieser Passfederverbindung kann, wie in Fig. 32 dargestellt, auch eine andere kraftschlüssige Verbindung, die insbesondere einen geriffelten, sternförmigen oder polygonalen, vorzugsweise drei-, vier- oder sechs-kantigen Querschnitt aufweist, zum Einsatz kommen. Gemäß dem in den Fig. 3 und 4 dargestellten Ausführungsbeispiel ist die Brems-Einrichtung 12 über die Entkopplungs-Einrichtung 11 mit der Antriebs-Einrichtung 8 verbunden. Eine hiervon abweichende Anordnung ist jedoch möglich. Die Brems-Einrichtung 12 kann insbesondere auch direkt mit der Antriebs-Welle 10 verbunden sein. Die Hülse 53 ist außerdem drehfest mit einer abtriebsseitigen Welle 65 und somit direkt oder indirekt mit dem Spindel-Trieb 18 verbunden.

Die Brems-Einrichtung 12 umfasst eine Reib-Mitnahme 56, welche von einer vorgespannten Federungs-Einrichtung 57 in einer Anpress-Richtung, insbesondere in Axialrichtung, gegen einen Reib-Belag 58 gedrückt wird. Die Reib-Mitnahme 56 liegt somit reibschlüssig am Reib-Belag 58 an.

Anstatt der Reib-Belags 58 kann auch eine Scheibe mit einer definierten Oberflächenbeschaffenheit zum Einsatz kommen. Die Scheibe weist eine Oberfläche mit einer definierten Rauheit oder einer definierten Verzahnung auf und erreicht somit eine vorbestimmte Reibungszahl.

Der Reib-Belag 58 ist in Axialrichtung und gegen Drehungen um die Längsachse 2 im Gehäuse 3 festgelegt. Er ist hierzu auf seiner der Reib-Mitnahme 56 in Richtung der Längsachse 2 gegenüberliegenden Seite fest mit einer Reib-Scheibe 60 verbunden, welche mit einem über eine mechanischen oder thermischen Verbindung 61 im Gehäuse 3 axial fixierten Fixierungs-Ring 62 verklebt oder verschraubt ist. Die mechanische oder thermische Verbindung 61 kann beispielsweise als Sicke, Zwickung oder thermische Schweißverbindung ausgeführt sein.

Die Reib-Mitnahme 56 ist um die Längsachse 2 drehbar gelagert, wobei bei einer Drehung der Reib-Mitnahme 56 um die Längsachse 2 vom Reib-Belag 58 eine Reibungskraft auf die Reib-Mitnahme 56 ausgeübt wird. Die vom Reib-Belag 58 auf die Reib-Mitnahme 56 ausgeübte Reibungskraft ist über die Federhärte der Federungs-Einrichtung 57 einstellbar. Die Federungs-Einrichtung 57 umfasst mehrere, hintereinander angeordnete, vorgespannte Tellerfedern 59. Es ist jedoch ebenso denkbar, anstelle der Tellerfedern 59 alternative Federungs-Elemente, beispielsweise eine Schraubendruckfeder, einzusetzen.

Die Brems-Einrichtung 12 umfasst des Weiteren einen Freilauf 63. Der Freilauf 63 ist auf der Hülse 53 angeordnet. Er grenzt abtriebsseitig an ein Axial-Lager 64. Anstelle des als Kugel- oder Rollenlagers ausgebildeten Axial-Lagers 64 kann jedoch selbstverständlich auch ein Gleitlager zur Lagerung der Brems-Einrichtung 12 vorgesehen sein. Der Freilauf 63 verbindet die Hülse 53 mit der Reib-Mitnahme 56. Der Freilauf 63 ist anisotrop ausgebildet, das heißt die bei einer relativen Verdrehung der Reib-Mitnahme 56 gegenüber der Hülse 53 über den Freilauf 63 übertragene Reibungskraft ist richtungsabhängig verschieden. Der Freilauf 63 verbindet vorzugsweise die Hülse 53 mit der Reib-Mitnahme 56 in einer Richtung drehfest, während er eine freie, das heißt ungebremste Drehung der Hülse 53 gegen die Reib-Mitnahme 56 in entgegengesetzter Richtung ermöglicht. Mittels des Freilaufs 63 ist somit eine Drehung der abtriebsseitigen Welle 65 um die Längsachse 2 in einer ersten Drehrichtung gegenüber einer Drehung in einer zweiten, der ersten Drehrichtung entgegengesetzten Drehrichtung begünstigt.

Das Axiallager 64 ist von einem in einer Ringnut 66 gelagerten Spannring 67 in einer Fixier-Hülse 68, welche mittels einer umlaufenden Sicke 69 im Gehäuse 3 in Axialrichtung fixiert ist, gehalten.

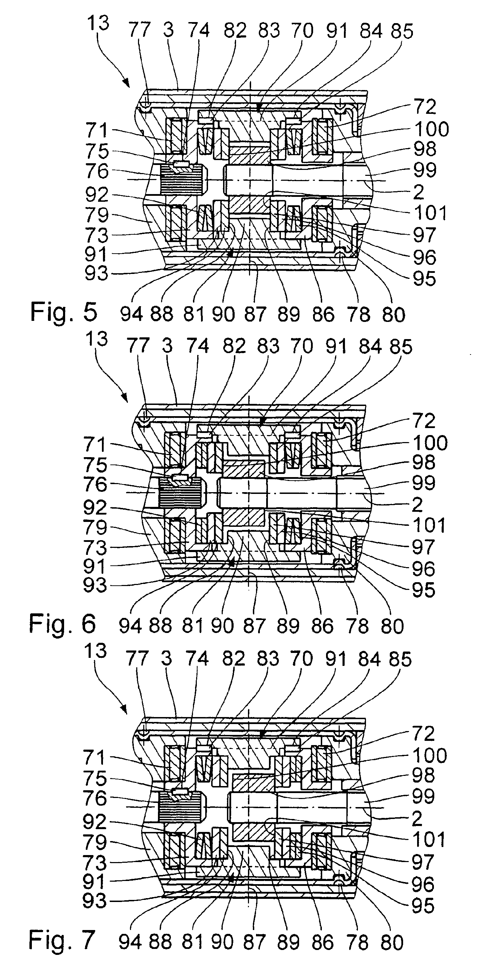

Im Folgenden wird unter Bezugnahme auf die Fig. 5 bis 7 die Überlast-Kupplung 13, welche sich beim Ausführungsbeispiel gemäß den Fig. 3 und 4 in Axialrichtung an die Brems-Einrichtung 12 anschließt, genauer beschrieben. Die Überlast-Kupplung 13 umfasst eine Antriebs-Kupplung 70, welche in Axialrichtung beidseitig in Lagern 71, 72 um die Längsachse 2 drehbar gelagert ist. Die Lager 71, 72 sind als Axial-Lager, insbesondere als Axial-Kugel- oder Rollenlager ausgebildet. Sie können jedoch selbstverständlich auch als Gleit-Lager ausgebildet sein. Die Antriebs-Kupplung 70 ist mehrteilig ausgebildet. Sie umfasst eine erste Kupplungs-Hülse 73, welche in drehmomentübertragender Weise, insbesondere mittels einer in einer Passfedernut 74 gelagerten Passfeder 75 mit einer antriebsseitigen, drehmomentübertragenden Welle 76 verbunden ist. Anstatt dieser Passfederverbindung kann auch eine andere kraftschlüssige Verbindung, die insbesondere einen geriffelten, sternförmigen oder polygonalen, vorzugsweise drei-, vier- oder sechs-kantigen Querschnitt aufweist, zum Einsatz kommen. Gemäß dem in den Fig. 3 und 4 dargestellten Ausführungsbeispiel handelt es sich bei der Welle 76 um die abtriebsseitige Welle 65 der Brems-Einrichtung 12

Die Lager 71, 72 sind fest mit mittels einer mechanischen oder thermischen Verbindung 77, 78 im Gehäuse 3 axial fixierten, ringförmigen Fixierungs-Elementen 79, 80 verbunden. Die mechanische oder thermische Verbindung 77, 78 kann beispielsweise als Sicke, Zwickung oder thermische Schweißverbindung ausgeführt sein.

Die erste Kupplungs-Hülse 73 ist in drehmomentübertragender Weise mit einer auch als Antriebs-Hülse 81 bezeichneten zweiten Kupplungs-Hülse verbunden. Hierzu ist wiederum eine in einer Passfedernut 82 angeordnete Passfeder 83 vorgesehen. Die Antriebs-Hülse 81 ist ihrerseits mittels einer in einer Passfedernut 84 gelagerten Passfeder 85 mit einer dritten Kupplungs-Hülse 86 in drehmomentübertragender Weise verbunden. Die drei Kupplungs-Hülsen 73, 81, 86 bilden zusammen die Antriebs-Kupplung 70.

Prinzipiell kann die Passfedernut 82, 84 mit der Passfeder 83, 85 entfallen. Anstelle der Passfederverbindungen 82, 83 bzw. 84, 85 kann auch eine andere drehmomentübertragende Verbindung wie beispielsweise eine Verzahnung zwischen den beiden zu verbindeten Bauteilen zum Einsatz kommen. Vorteilhaft ist jedoch, dass die Verbindung eine Verschiebung der miteinander verbundenen Bauteile in Axialrichtung um einen Axialweg ermöglicht. Diese Verschiebbarkeit ist beim Zusammenbau der Antriebs-Kupplung 70 von Vorteil.

Eine drehmomentübertragende Verbindung zwischen der Antriebs-Hülse 81 und der dritten Kupplungs-Hülse 86 ist nicht zwingend notwendig. Die in den Fig. 5 bis 7 dargestellte Ausführungsform weist jedoch den Vorteil auf, dass die Überlast-Kupplung 13 spiegelsymmetrisch zu einer senkrecht zur Längsachse 2 verlaufenden Mittel-Ebene 87 ausgebildet ist. Dies vereinfacht sowohl die Herstellung der Überlast-Kupplung 13 als auch deren Einbau um Gehäuse 3. Die Kupplungs-Hülsen 73, 81 und 86 sind in Radialrichtung fest miteinander verbunden. In Axialrichtung weist die Verbindung zwischen der ersten Kupplungs-Hülse 73 und der Antriebs-Hülse 81 sowie die Verbindung zwischen der Antriebs-Hülse 81 und der dritten Kupplungs-Hülse 86 ein wenig Spiel auf. Dies wird durch die Anordnung der Passfedern 83 und 85 ermöglicht und erleichtert den Zusammenbau der Antriebs-Kupplpung 70.

Die Antriebs-Hülse 81 ist einteilig ausgebildet. Sie ist als äußerer Hohlzylinder 91 mit einem selbst hohlzylindrischen Zwischenboden ausgebildet. Der Zwischenboden wird im Folgenden als innerer Zylinder 90 bezeichnet. Er hat einen Außendurchmesser, welcher exakt dem Innendurchmesser des äußeren Hohlzylinders 91 entspricht, und einen Innendurchmesser. Die Antriebs-Hülse 81 weist somit ein im Längsschnitt T-förmiges Profil auf. Der innere Zylinder 90 der Antriebs-Hülse 81 weist eine Grundfläche 88 und eine Deckfläche 89 auf, welche in Axialrichtung freiliegende Anlageflächen bilden.

Des Weiteren umfasst die Überlast-Kupplung 13 eine erste Feder 92, welche mit einer ersten Reib-Scheibe 93 und dadurch zumindest indirekt mit einem ersten Reib-Belag 94 zusammenwirkt. Der erste Reib-Belag 94 ist fest mit der ersten Reib-Scheibe 93 verbunden, beispielsweise verklebt. Mittels der ersten Feder 92 ist die erste Reib-Scheibe 93 mit dem ersten Reib-Belag 94 in Axialrichtung gegen die erste Kupplungs-Hülse 73 abgestützt. Die erste Feder 92 ist vorgespannt. Sie kann insbesondere als Tellerfeder oder Schraubendruckfeder ausgebildet sein.

Entsprechend umfasst die Überlast-Kupplung 13 eine zweite Feder 95, eine zweite Reibscheibe 96 und einen zweiten Reib-Belag 97. Diese sind spiegelsymmetrisch bezüglich der Mitteleben 87 zur ersten Feder 92, der ersten Reib-Scheibe 93 und dem ersten Reib-Belag 94 angeordnet. Die Reib-Beläge 94, 97 werden somit von den Federn 92, 95 in einander entgegengesetzte Richtungen, insbesondere aufeinander zu gedrückt. Die Reibscheiben 93, 96 mit den Reib-Belägen 94, 97 bilden Drehmoment-Übertragungs-Elemente.

Die Verschiebbarkeit der einzelnen Elemente der Antriebs-Kupplung 70 ist insbesondere beim Vorspannprozess der integrierten Federn 92 und 95 vorteilhaft. Der sich bei diesem Prozess unter der Federkraft ändernde Federweg der Tellerfedern kann dadurch ausgeglichen werden.

Schließlich umfasst die Überlast-Kupplung 13 eine Abtriebs-Kupplung 98, welche in drehmomentübertragender Weise, insbesondere starr, mit einer abtriebsseitigen Welle 99 verbunden ist. Bei der abtriebsseitigen Welle 99 handelt es sich gemäß dem in den Figuren 1 bis 4 dargestellten Ausführungsbeispiel um die Gewinde-Spindel 14. Die Abtriebs-Kupplung 98 ist als zylinderförmige Scheibe ausgebildet, deren Erstreckung in Richtung der Längsachse 2 gerade derjenigen des inneren Zylinders 90 der Antriebs-Hülse 81 entspricht. Die Abtriebs-Kupplung 98 weist wie der innere Zylinder 90 der Antriebs-Hülse 81 eine Grundfläche 100 und eine Deckfläche 101 auf, welche ebenfalls in Axialrichtung freiliegende Anlageflächen bilden. Die Abtriebs-Kupplung 98 weist einen Außendurchmesser auf, welcher geringer ist als der Innendurchmesser des inneren Zylinders 90. Dies ermöglicht eine berührungsfreie Anordnung der Abtriebs-Kupplung 98 bezüglich des inneren Zylinders 90 der Antriebs-Hülse 81 der Antriebs-Kupplung 70.

Die erste Reib-Scheibe 93 mit dem ersten Reib-Belag 94 ist relativ zur ersten Kupplungs-Hülse 73 um die Längsachse 2 drehbar. Entsprechend ist die zweite Reib-Scheibe 96 mit dem zweiten Reib-Belag 97 gegen die dritte Kupplungs-Hülse 86 um die Längsachse 2 drehbar.

Die Abtriebs-Kupplung 98 ist gegen die Federkraft der Federn 92, 95 in Richtung der Längsachse 2 in der Antriebs-Kupplung 70 verschiebbar.

Sofern keine äußeren Kräfte auf die Welle 99 wirken, befindet sich die Abtriebs-Kupplung 98 aufgrund der von den Federn 92, 95 ausgeübten Kraft in einer zur Mittelebene 87 symmetrischen Mittelstellung, wie beispielsweise in Fig. 5 dargestellt. In dieser Stellung der Abtriebs-Kupplung 98 liegt der erste Reib-Belag 94 an den Grundflächen 88, 100 des inneren Zylinders 90 der Antriebs-Hülse 81 einerseits und der Abtriebs-Kupplung 98 andererseits an. Entsprechend liegt der zweite Reib-Belag 97 in der Mittelstellung der Abtriebs-Kupplung 98 an den Deckflächen 89, 101 des inneren Zylinders 90 der Antriebs-Hülse 81 einerseits und der Abtriebs-Kupplung 98 andererseits an. Somit ist mit der Abtriebs-Kupplung 98 in Mittelstellung ein Drehmoment von der Antriebs-Hülse 81 über die Reib-Beläge 94, 97 auf die Abtriebs-Kupplung 98 übertragbar. Der Betrag des maximal von der Antriebs-Hülse 81 auf die Abtriebs-Kupplung 98 übertragbaren Drehmoments hängt unter anderem von der Vorspannung der Federn 92, 95 und der Oberflächenbeschaffenheit der Reib-Beläge 94, 97 sowie der Grundflächen 88, 100 und der Deckflächen 89, 101 ab. Anstatt der Reib-Beläge 94, 97 kann auch eine Scheibe mit einer definierten Oberflächenbeschaffenheit zum Einsatz kommen. Die Scheibe weist eine Oberfläche mir einer definierten Rauheit oder einer definierten Verzahnung auf und erreicht somit eine vorbestimmte Reibungszahl.

Selbstverständlich können die Anbindungen der antriebsseitigen Welle 76 und der abtriebsseitigen Welle 99 an die Antriebs-Kupplung 70 und die Abtriebs-Kupplung 98 der Überlast-Kupplung 13 auch vertauscht sein, sodass die Welle 76 mit Abtriebs-Kupplung 98 und die Welle 99 mit der Antriebs-Kupplung 70 in drehmoment-übertragender Weise verbunden ist. Dies hat keinen Einfluss auf die Funktionsweise der Überlast-Kupplung 13.

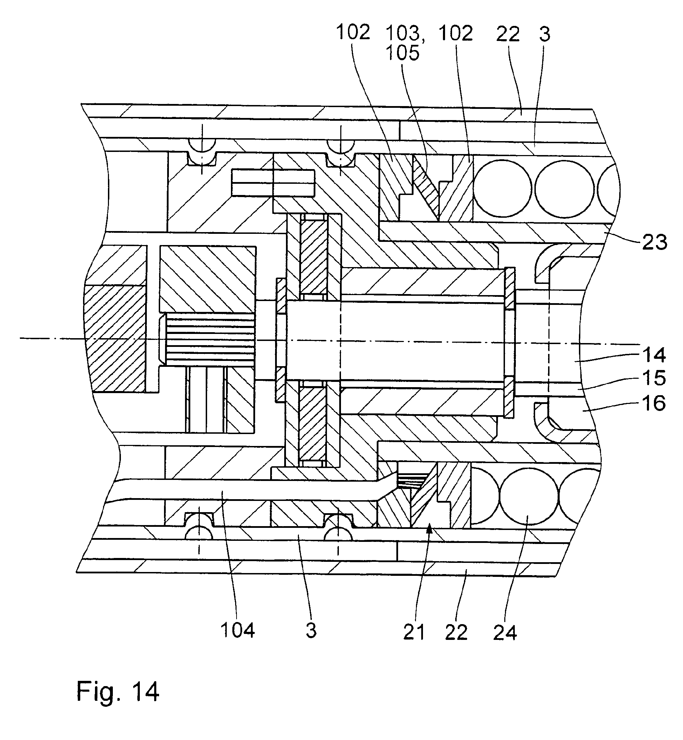

Im Folgenden wird der Sensor 21 unter Bezugnahme auf die Fig. 3 und 14 genauer beschrieben. Der Sensor 21 ist in Längsrichtung zwischen der im Verstell-Element 19 angeordneten und gegen den Deckel 25 desselben abgestützten Schraubendruckfeder 24 und einem im Gehäuse 3 in Axialrichtung festgelegten Lagerbock 102 angeordnet. In Längsrichtung ist jeweils ein Lagerbock 102 auf jeder Seite der Trägerscheibe 105 angeordnet. Die Lagerböcke 102 stellen sicher, dass die von der Schraubendruckfeder 24 ausgeübte Kraft stets entlang der Längsrichtung, zentrisch auf den Sensor 21 wirkt.

Der Sensor 21 ist als Trägerscheibe 105 mit Kraftaufnehmer 103 ausgebildet. Als Kraftaufnehmer 103 sind beispielsweise Dehnungsmessstreifen oder ähnliche kraftsensierende Messaufnehmer vorgesehen. Die Trägerscheibe 105 ist elastisch verformbar. Sie ist vorzugsweise aus Stahl, Kunststoff oder Keramik. Die Kraftaufnehmer 103 sind flächig auf der Trägerscheibe 105 aufgebracht und können zu einer Messbrücke verschaltet werden. Bei dem Sensor 21 handelt es sich somit um einen Kraftsensor. Die mittels des Sensors 21 gemessene elektrische Spannung ist somit direkt abhängig von der von der Schraubendruckfeder 24 auf den Sensor 21 ausgeübten Kraft. Ist der Federkraftverlauf der Schraubendruckfeder 24 über den Ausfahrweg des Verstell-Elements 19 bekannt, kann somit aus der mittels des Sensors 21 gemessenen Spannung auf den Verfahrweg des Verstell-Elements 19 geschlossen werden. Hierzu ist der Sensor 21 in datenübertragender Weise mit Sensorleitungen 104 verbunden, welche in der Zuleitung 29 aus dem Gehäuse 3 herausgeführt und in datenübertragender Weise mit der Steuer-Einrichtung 31 verbunden sind. Der Federkraftverlauf der Schraubendruckfeder 24 ist vorzugsweise in einem Speicher der Steuer-Einrichtung 31 abgelegt.

Der Sensor 21 kann auch als piezoelektrisches Element ausgebildet sein.

Im Folgenden wird die Funktionsweise des Betätigungselements 1 beschrieben. Um das Verstell-Element 19 in Richtung der Längsachse 2 gegenüber dem Gehäuse 3 zu verschieben, das heißt in Längsrichtung aus dem Gehäuse 3 auszufahren oder in dieses einzufahren, wird der Spindel-Trieb 18 vom Elektromotor 7 angetrieben. Die Anbindung des Elektromotors 7 über das Getriebe 9 an den Spindel-Trieb 18 kann direkt oder indirekt unter Zwischenschaltung der Entkopplungs-Einrichtung 11 und/oder der Brems-Einrichtung 12 und/oder der Überlast-Kupplung 13 ausgebildet sein. Ein Ausfahren des Verstell-Elements 19 wird von der Schraubendruckfeder 24, welche einen Kraftspeicher bildet, unterstützt.

Der Verfahrweg des Verstell-Elements 19 gegenüber dem Gehäuse 3 kann mit Hilfe des Sensors 21 bestimmt werden. Der Sensor 21 erfasst hierzu die von der Schraubendruckfeder 24 aktuell auf das Verstell-Element 19 ausgeübte Kraft, welche vom Spannungs-Zustand der Schraubendruckfeder 24 und somit vom Verfahrweg des Verstell-Elements 19 abhängig ist. Über eine in der Steuer-Einrichtung 31 abgespeicherte Weg-Kraft-Charakteristik der Schraubendruckfeder 24 kann somit aus der vom Sensor 21 gemessenen Kraft auf den Verfahrweg geschlossen werden. Toleranzen, wie sie bei und/oder nach der Fertigung auftreten, können durch Anpassung der Weg-Kraft-Charakteristik in der Steuer-Einrichtung 31 und eine entsprechend angepasste Ansteuerung des Elektronmotors 7 kompensiert werden. Hierbei wird insbesondere die Abweichung der durch Kraftmessung an vorbestimmten, definierten Kraftmesspunkten ermittelten tatsächlichen Weg-Kraft-Charakteristik, das heißt der Federkraftkennlinie, von der theoretischen Federkraftkennlinie durch eine elektrische Steuerung des Elektromotors 7 mittels der Steuer-Einrichtung 31 kompensiert. Ist die tatsächlich ermittelte Kraft der Schraubendruckfeder 24 geringer als der theoretische Kraftverlauf, so wird über die elektrische Steuer-Einrichtung 31 mehr Leistung an den Elektromotor 7 abgegeben. Ist die tatsächliche Kraft der Schraubendruckfeder 24 größer als der theoretische Kraftverlauf, so wird über die elektrische Steuer-Einrichtung 31 weniger Leistung an den Elektromotor 7 abgegeben. Hierdurch werden Toleranzen kompensiert, und es stellt sich eine stets gleichmäßige, vorbestimmbare Ausschubkraft des Betätigungselements 1 ein.

Änderungen der Weg-Kraft-Charakteristik der Schraubendruckfeder 24 über deren Lebensdauer und/oder aufgrund von äußeren Einflüssen wie beispielsweise Temperaturschwankungen können ebenfalls durch eine Anpassung der Leistungskennlinie des Elektromotors 7 mittels der elektrischen Steuer-Einrichtung 31 kompensiert werden.

Im Folgenden wird die Funktion der Entkopplungs-Einrichtung 11 beschrieben. Bei einer starren Kopplung des Spindel-Triebs 18 an den Elektromotor 7 dreht sich letzterer bei einer manuellen Betätigung des Betätigungselements 1 stets mit. Dies wird durch die Zwischenschaltung der Entkopplungs-Einrichtung 11 zwischen den Spindel-Trieb 18 und die Antriebs-Einrichtung 8 vermieden. Die Entkopplungs-Einrichtung 11 ermöglicht eine Ankopplung des Spindel-Triebs 18 an den Elektromotor 7 bei einer Betätigung des Elektromotors 7 zur Verstellung des Betätigungselements 1, während der Elektromotor 7 vom Spindel-Trieb 18 bei einer rein manuellen Betätigung des Betätigungselements 1 entkoppelt ist. Eine Drehung der Antriebs-Welle 10 führt über die starre Verbindung derselben mit dem ersten Entkopplungs-Element 34 zu einer Drehbewegung des ersten Entkopplungs-Elements 34 um die Längsachse 2. Bei einer Drehung des ersten Entkopplungs-Elements 34 um die Längsachse 2 wird das Kuppel-Element 38 aufgrund seines Trägheitsmoments relativ zum ersten Entkopplungs-Element 34 verdreht. Hierdurch wird es aufgrund der nicht-selbsthemmenden Gewinde 37, 39 in Axialrichtung relativ zum ersten Entkopplungs-Element 34 verschoben. Eine Drehung der Antriebs-Welle 10 in einer ersten Drehrichtung führt hierbei zu einer Verschiebung des Kuppel-Elements 38 in Ausfahr-Richtung, während eine Drehung der Antriebs-Welle 10 in entgegengesetzter Drehrichtung zu einer Verschiebung des Kuppel-Elements 38 in entgegengesetzter, das heißt in Einfahr-Richtung, führt. Aufgrund der stets vorhandenen Reibung zwischen dem Kuppel-Element 38 und dem ersten Entkopplungs-Element 34 wird das Kuppel-Element 38 bei fortgesetzter Drehung der Antriebs-Welle 10 in der relativ zum Entkopplungs-Element 34 verschobenen Stellung gehalten. Durch die Verschiebung des Kuppel-Elements 38 kommen die Mitnahme-Elemente 41, 42 in formschlüssigen Eingriff mit den jeweils in Verschiebe-Richtung im zweiten Entkopplungs-Element 35 angeordneten Mitnahme-Konturen 47, 48. Vorteilhafterweise weisen die Mitnahme-Elemente 41, 42 und/oder die Mitnahme-Konturen 47, 48 endseitige Abschrägungen und/oder Abrundungen auf, welche das in Eingriffbringen der Mitnahme-Elemente 41, 42 mit den Mitnahme-Konturen 47, 48 erleichtern. Sobald die Mitnahme-Elemente 41, 42 mit den Mitnahme-Konturen 47, 48 in Eingriff stehen, ist das erste Entkopplungs-Element 34 in drehmomentübertragender Weise an das zweite Entkopplungs-Element 35 gekoppelt. In diesem Zustand wird eine Drehbewegung der Antriebs-Welle 10 über die Verbindungshülse 36 auf das erste Entkopplungs-Element 34 und von diesem auf das zweite Entkopplungs-Element 35 sowie von diesem abtriebsseitig weiter zum Spindel-Trieb 18 übertragen. Eine Drehbewegung der Antriebs-Welle 10 führt somit automatisch zu einem Einkoppeln der Entkopplungs-Einrichtung 11 und damit zu einer drehmoment-übertragenden Verbindung zwischen der Antriebs-Einrichtung 8 und dem Spindel-Trieb 18.

Die von den Federn 43, 44 auf den Verschiebe-Schlitten 40 des Kuppel-Elements 38 ausgeübte resultierende Gesamtkraft wirkt hierbei einer axialen Verschiebung des Kuppel-Elements 38 relativ zum ersten Entkopplungs-Element 34 entgegen. Wird die Antriebs-Welle 10 mit einer Dreh-Geschwindigkeit, welche kleiner als eine definierte, minimale Dreh-Geschwindigkeit ist, gedreht, wird das Kuppel-Element 38 aufgrund der von den vorgespannten Federn 43, 44 auf den Verschiebe-Schlitten 40 ausgeübten, resultierenden Kraft in die Mittelstellung geschoben. Hierbei ist es von Bedeutung, dass, die Gewinde 37, 39 aufgrund ihrer großen Gewindesteigung nicht-selbsthemmend ausgebildet sind. In der Mittelstellung stehen die Mitnahme-Elemente 41, 42 außer Eingriff mit den Mitnahme-Konturen 47, 48. In diesem Zustand sind die Entkopplungs-Elemente 34, 35 frei gegeneinander verdrehbar.

Durch eine Anpassung der Federkräfte der Federn 43, 44 an das Trägheitsmoment des Kuppel-Elements 38 kann die minimale Drehgeschwindigkeit der Antriebs-Welle 10 festgelegt werden, ab welcher ein antriebsseitiges Drehmoment mittels der Entkopplungs-Einrichtung 11 an die abtriebsseitig angeordnete Gewinde-Spindel 14 übertragen wird. Somit kann die Kopplungs-Charakteristik der Entkopplungs-Einrichtung 11 auf einfache Weise angepasst werden.

Bei eine rein manuellen Betätigung des Betätigungselements 1 befindet sich das Kuppel-Element 38 in der entkoppelnden Mittelstellung. Somit kann das zweite Entkopplungs-Element 35 zusammen mit einer abtriebsseitigen Welle, insbesondere der Gewinde-Spindel 14, um die Längsachse 2 gedreht werden, ohne hierbei die Antriebs-Welle 10 mit einem Drehmoment zu beaufschlagen. Hierdurch wird die Antriebs-Einrichtung 8 vor einer durch eine manuelle Betätigung des Betätigungselements 1 verursachten Beschädigung geschützt. Manuell auf das Betätigungselement 1 ausgeübte Axialkräfte, welche über das zweite Entkopplungs-Element 35 auf die Entkopplungs-Einrichtung 11 wirken, werden von den Axial-Lagern 51, 52 aufgenommen.

Im Folgenden wird die Funktion der Brems-Einrichtung 12 beschrieben. Je nach Auslegung des Betätigungselements 1 kann es von Vorteil sein, die Eigenreibung der Bauteile im Betätigungselement 1 zu erhöhen, um ein selbständiges Verharren des Verstell-Elements 19 in einer gegebenen Ausfahr-Position zu begünstigen und dadurch die Antriebs-Einrichtung 8 im statischen Zustand des Betätigungselements 1 zu entlasten. Dies wird durch das Zusammenwirken der Reib-Mitnahme 56 mit dem Reib-Belag 58 erreicht. Eine Drehung der abtriebsseitigen Welle 65, insbesondere des Spindel-Triebs 18, in eine erste Drehrichtung bezüglich der Längsachse 2 führt zu einer entsprechenden Drehung der Reib-Mitnahme 56, welche von der Federungs-Einrichtung 57 in einer Anpress-Richtung gegen den Reib-Belag 58 gepresst wird. Die Reibung zwischen der sich um die Längsachse 2 drehenden Reib-Mitnahme 56 und dem drehfest im Gehäuse 3 angeordneten Reib-Belag 58 führt zu einer Bremsung der Drehbewegung der Welle 65. Eine Drehung der Welle 65, insbesondere des Spindel-Triebs 18, in entgegengesetzte Drehrichtung um die Längsachse 2 ist mittels des Freilaufs 63 von der Reib-Mitnahme 56 entkoppelt, das heißt führt nicht zu einer entsprechenden Drehung der Reib-Mitnahme 56 und wird daher nicht durch eine Reibungskraft zwischen der Reib-Mitnahme 56 und dem Reib-Belag 58 gebremst.

Die Stärke der Reibungskraft ist unter anderem von der Ausbildung des Reib-Belags 58, der mit diesem in Kontakt stehenden Oberfläche der Reib-Mitnahme 56 sowie insbesondere der Federkraft der Federungs-Einrichtung 57 abhängig.

Der Freilauf 63 sorgt dafür, dass eine Drehbewegung der Hülse 53 nur in einer Richtung auf die Reib-Mitnahme 56 wirkt und dadurch aufgrund des Zusammenwirkens der Reib-Mitnahme 56 mit dem Reib-Belag 58 zu einer Bremsung der Drehbewegung führt. Mittels des Freilaufs 63 wird somit eine einseitig wirkende Bremskraft erreicht. Soll die Brems-Einrichtung 12 in beiden Drehrichtungen wirken, kann die Reib-Mitnahme 56 direkt, das heißt ohne den Freilauf 63, mit der Hülse 53 verbunden werden. Durch eine geeignete Oberflächengestaltung im Kontaktbereich zwischen der Reib-Mitnahme 56 und dem Reib-Belag 58 kann auch ohne den Freilauf 63 eine richtungsabhängig unterschiedliche Bremskraft erreicht werden.

Ferner kann es vorteilhaft sein, die Reib-Mitnahme 56 in Axialrichtung verschiebbar auf der Hülse 53 zu lagern. Hierdurch kann eine Verringerung der vom Reib-Belag 58 auf die Reib-Mitnahme 56 ausgeübten Bremskraft durch Einwirken von Axialkräften, welche der Federkraft der Federungs-Einrichtung 57 entgegenwirken, auf die Reib-Mitnahme 56 erreicht werden.

In einer besonders vorteilhaften, in den Figuren nicht dargestellten Ausführungsform ist die Anordnung der Reib-Mitnahme 56 auf der Hülse 53 entsprechend der Anordnung des Kuppel-Elements 38 auf dem ersten Entkopplungs-Element 34 der Entkopplungs-Einrichtung 11 ausgebildet mit dem Unterschied, dass eine Drehbewegung der Hülse 53 unabhängig von der Drehrichtung zu einem Abheben der Reib-Mitnahme 56 vom Reib-Belag 58 führt. Hierdurch wird erreicht, dass das vom Elektromotor 7 ausgeübte Drehmoment nicht durch die Reibungskraft zwischen der Reib-Mitnahme 56 und dem Reib-Belag 58 gebremst wird, und die Brems-Einrichtung 12 ihre Bremskraft nur bei Stillstand des Elektromotors 7 ausübt.

Mit anderen Worten ist der elektrische Antrieb des Spindel-Triebs 8 bei diesem Ausführungsbeispiel ungebremst, während das Betätigungselement 1 gegen ein manuelles Verstellen gebremst ist.

Im Folgenden wird die Funktion der Überlast-Kupplung 13 beschrieben. Sofern die Welle 99 nicht mit einer Axialkraft beaufschlagt wird, wird die Abtriebs-Kupplung 98 von den Federn 92 und 95 in die Mittelstellung geschoben und dort gehalten. Hierbei werden die Reib-Beläge 94, 97 von den Federn 92, 95 gegen die Grundflächen 88, 100 und Deckflächen 89, 101 sowohl der Abtriebs-Kupplung 98 als auch des inneren Zylinders 90 der Antriebs-Hülse 81 gepresst. Die Reib-Beläge 94, 97 übertragen in dieser Stellung der Abtriebs-Kupplung 98 ein Drehmoment von der antriebsseitigen Welle 76 über die Antriebs-Kupplung 70 auf die mit der abtriebsseitigen Welle 99 verbundene Abtriebs-Kupplung 98. In dieser Stellung der Abtriebs-Kupplung 98 ist somit die Antriebs-Einrichtung 8 in drehmomentübertragender Weise an den Spindel-Trieb 18 gekoppelt.

Bei einer Drehung der antriebsseitigen Welle 76 wird die drehfest mit dieser verbundene Antriebs-Kupplung 70, welche in den Lagern 71, 72 gelagert ist, mit der Welle 76 um die Längsachse 2 gedreht und überträgt aufgrund des Reib-Kontakts zwischen den Reib-Belägen 94, 97 und den Grundflächen 88, 100 sowie den Deckflächen 89, 101 des inneren Zylinders 90 der Antriebs-Hülse 81 und der Abtriebs-Kupplung 98 ein Drehmoment von der Antriebs-Kupplung 70 auf die Abtriebs-Kupplung 98. Das maximal übertragbare Drehmoment ist hierbei abhängig von der Federhärte der Federn 92, 95 sowie der Beschaffenheit der Reib-Beläge 94, 97, insbesondere deren Zusammenwirken mit den Grundflächen 88, 100 und Deckflächen 89, 101. Bei Überschreiten des maximal übertragbaren Drehmoments rutscht die Abtriebs-Kupplung 98 durch. Die Federn 92, 95 bilden somit zusammen mit den Reib-Belägen 94, 97 einen Überlast-Schutz.

Wird eine axiale Druck-Kraft auf den Spindel-Trieb 18 und damit über die abtriebsseitige Welle 99 auf die Abtriebs-Kupplung 98 ausgeübt, so wird die erste Feder 92, wie in Fig. 6 dargestellt, zusammengedrückt, wobei der erste Reib-Belag 94 von der Grundfläche 88 des inneren Zylinders 90 der Antriebs-Hülse 81 abhebt. Gleichzeitig wird durch die Axialverschiebung der Abtriebs-Kupplung 98 der reibschlüssige Kontakt zwischen dem zweiten Reib-Belag 97 und der Deckfläche 101 der Abtriebs-Kupplung 98 unterbrochen. Weder der erste Reib-Belag 94 noch der zweite Reib-Belag 97 stellen in dieser Position der Abtriebs-Kupplung 98 eine reibschlüssige Verbindung zwischen der Antriebs-Kupplung 70 und der Abtriebs-Kupplung 98 her. Die Abtriebsseite ist somit von der Antriebsseite bezüglich Drehungen um die Längsachse 2 entkoppelt. Hierdurch wird sichergestellt, dass die Antriebs-Einrichtung 8 nicht durch eine manuelle Einwirkung auf das Betätigungselement 1 beschädigt wird. Über die Vorspannung der Federn 92, 95 wird eine definierte axiale Auslösekraft erreicht, bei deren Überschreiten die Drehmoment-Übertragung zwischen der Antriebs-Kupplung 70 und der Abtriebs-Kupplung 98 unterbrochen wird.

Wirkt eine axiale Zug-Kraft auf den Spindel-Trieb 18 und damit auf die abtriebsseitige Welle 99, wird entsprechend die zweite Feder 95, wie in Fig. 7 dargestellt, zusammengedrückt. Der reibschlüssige Kontakt zwischen dem zweiten Reib-Belag 97 und der Deckfläche 89 des inneren Zylinders 90 der Antriebs-Hülse 81 geht verloren. Außerdem wird der reibschlüssige Kontakt zwischen dem ersten Reib-Belag 94 und der Grundfläche 100 der Abtriebs-Kupplung 98 unterbrochen. Die Überlast-Kupplung 13 wirkt somit bidirektional, das heißt bei einer axialen Krafteinwirkung auf den Spindel-Trieb 18, insbesondere bei einer manuellen Verstellung des Verstell-Elements 19, sowohl in Ausfahr-Richtung als auch in Einfahr-Richtung.

Die Reibungskraft zwischen der ersten Reib-Scheibe 93 mit dem ersten Reib-Belag 94 und der ersten Kupplungs-Hülse 73 bei einer Verdrehung dieser Elemente bezüglich der Längsachse 2 ist im Vergleich zur Reibungskraft zwischen den Reib-Belägen 94, 97 und der Abtriebs-Kupplung 98 bzw. der Antriebs-Hülse 81 vernachlässigbar. Somit ist auch das von der Abtriebs-Kupplung 98 über die erste Reib-Scheibe 93 mit dem ersten Reib-Belag 94 und die erste Feder 92 auf die erste Kupplungs-Hülse 73, das heißt auf die Antriebs-Kupplung 70 übertragbare Drehmoment im Vergleich zum maximal von der Antriebs-Kupplung 70 auf die Abtriebs-Kupplung 98 übertragbaren Drehmoment vernachlässigbar. Das Gleiche gilt für die Reibungskraft und Drehmoment-Übertragbarkeit zwischen der zweiten Reib-Scheibe 96 mit dem zweiten Reib-Belag 97 und der dritten Kupplungs-Hülse 86.

Lässt die von außen auf den Spindel-Trieb 18 und damit auf die Welle 99 wirkende Axialkraft wieder nach, so überwiegen die Federkräfte der Federn 92, 95, und die Abtriebs-Kupplung 98 wird wieder in die in Fig. 5 dargestellte Mittellage verschoben, in welcher sie über die Reib-Beläge 94, 97 in drehmomentübertragender Weise an die Antriebs-Kupplung 70 gekoppelt ist.

Eine Funktion der Überlast-Kupplung 13 besteht somit darin, das Betätigungselement 1 selbst und das an den Befestigungselementen 5, 20 angebundene Umfeld vor mechanischer Überbelastung zu schützen. Eine derartige Überbelastung kann beispielsweise bei einem so genannten Panikeingriff auftreten. Wird vom Umfeld des Betätigungselements 1, beispielsweise durch einen Benutzer, eine Kraft durch das Verstell-Element 19 und/oder das Gehäuse 3 in das Bertätigungselement 1 eingeleitet, deren Axialkomponente einen vorbestimmten Betrag übersteigt, kann dies, unabhängig vom Betriebs-Zustand der Antriebs-Einrichtung 7 zu einer Überbelastung der Antriebs-Einrichtung 7 führen.Eine derartige Überbelastung kann durch die Entkopplung des Spindel-Triebs 18 von der Antriebs-Einrichtung 7 mittels der Überlast-Kupplung 13 vermieden werden.

Es sei noch einmal darauf hingewiesen, dass die Entkopplungs-Einrichtung 11, die Brems-Einrichtung 12 und die Überlast-Kupplung 13 in beliebiger Reihenfolge und Kombination im Betätigungselement 1 miteinander kombiniert werden können.

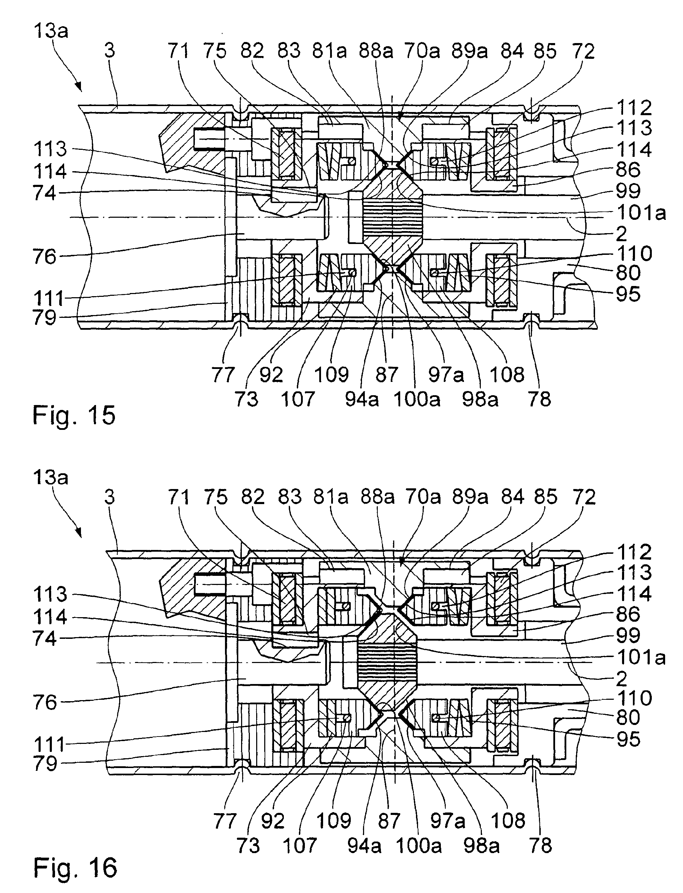

Im Folgenden wird unter Bezugnahme auf die Fig. 15 bis 17 ein zweites Ausführungsbeispiel der Überlast-Kupplung 13a beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Im Gegensatz zum ersten Ausführungsbeispiel sind die Drehmoment-Übertragungs-Elemente als Mitnahme-Ringe 107, 108 ausgebildet. Die Mitnahme-Ringe 107, 108 sind segmentiert ausgebildet. Sie umfassen mehrere, mindestens zwei, insbesondere mindestens drei, vorzugsweise mindestens vier Segmente, welche durch Feder-Ringe 109, 110 radial zusammengehalten werden. Die Feder-Ringe 109, 110 sind in axial offenen Ring-Nuten 111, 112 angeordnet. Auf ihrer der Mittelebene 87 zugewandten Seite sind die Mitnahme-Ringe 107, 108 abgeschrägt, insbesondere doppelt abgeschrägt ausgebildet. Jeder Mitnahme-Ring 107, 108 weist somit eine erste, in Radialrichtung äußere Schrägfläche 113 und eine zweite, in Radialrichtung innere Schrägfläche 114 auf. Die erste Schrägfläche 113 und die zweite Schrägfläche 114 grenzen aneinander. Sie schließen vorzugsweise einen Winkel von 90° ein.

Entsprechend ist die Abtriebs-Kupplung 98a doppel-kegelstumpf-förmig ausgebildet, wobei die Grundfläche 100a als Kegelmantelfläche, das heißt abgeschrägt, ausgebildet ist. Ebenso ist die Deckfläche 101a als Kegelmantelfläche, das heißt abgeschrägt, ausgebildet. Der Öffnungswinkel der Kegel beträgt vorzugsweise 90°.

Entsprechend sind auch die Grundfläche 88a und die Deckfläche 89a des Zwischen-Bodens der Antriebs-Hülse 81 a abgeschrägt ausgebildet. Sie schließen jeweils Winkel von 45° mit der Längsachse 2 ein.

Befindet sich die Abtriebs-Kupplung 98a in der in Fig. 15 dargestellten Mittelstellung, so liegen die äußeren Schrägflächen 113 der Mitnahme-Ringe 107, 108 reibschlüssig an der schrägen Grundfläche 88a und der schrägen Deckfläche 89a der Antriebs-Hülse 81 a an, während die inneren Schrägflächen 114 an der schrägen Grundfläche 100a und der schrägen Deckfläche 101a der Abtriebs-Kupplung 98a reibschlüssig anliegen. In dieser Stellung ist die Antriebs-Kupplung 70a über die Antriebs-Hülse 81a aufgrund dieser reibschlüssigen Verbindungen in drehmomentübertragender Weise an die Abtriebs-Kupplung 98a gekoppelt.

Bei Einwirken einer Axialkraft auf die Welle 99 wird die Drehmoment-übertragung zwischen dem einen der Mitnahme-Ringe 107, 108 und der Antriebs-Hülse 81a einerseits und dem anderen der Mitnahme-Ringe 108, 107 und der Abtriebs-Kupplung 98a andererseits unterbrochen, so dass die Antriebs-Kupplung 70a von der Abtriebs-Kupplung 98a entkoppelt ist.

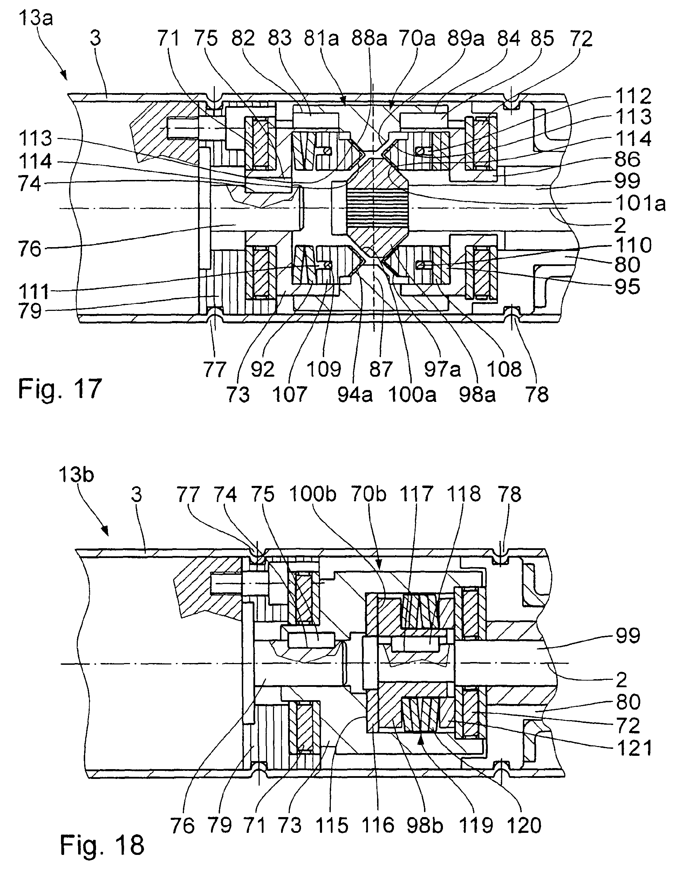

Im Folgenden wird unter Bezugnahme auf die Fig. 18 ein drittes Ausführungsbeispiel der Überlast-Kupplung 13b beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b. Im Gegensatz zum ersten Ausführungsbeispiel ist die Antriebs-Kupplung 70b beim dritten Ausführungsbeispiel einteilig ausgebildet. Sie umfasst ausschließlich die erste Kupplungs-Hülse 73, welche in den Lagern 71 und 72 um die Längsachse 2 drehbar gelagert ist. Die erste Kupplungs-Hülse 73 weist eine in Axialrichtung weisende, das heißt senkrecht zur Längsachse 2 ausgerichtete, kreisringförmige Anlagefläche 115 auf. An der Anlage-Fläche 115 liegt ein Reib-Belag 116 an. Der Reib-Belag 116 ist kreisringförmig ausgebildet. Er ist vorzugsweise drehfest mit der Anlagefläche 115 der Kupplungs-Hülse 73 verbunden, beispielsweise verklebt. Auf seiner der Anlage-Fläche 115 entgegengesetzten Seite liegt der Reib-Belag 116 reibschlüssig an der Grundfläche 100b der hülsenartig ausgebildeten Abtriebs-Kupplung 98b an. Anstatt des Reib-Belags 116 kann auch eine Scheibe mit einer definierten Oberflächenbeschaffenheit zum Einsatz kommen. Die Scheibe weist eine Oberfläche mit einer definierten Rauheit oder einer definierten Verzahnung auf und erreicht somit eine vorbestimmbare Reibungszahl.

Die Abtriebs-Kupplung 98b ist mittels einer in einer Passfedernut 117 angeordneten Passfeder 118 drehfest mit der Welle 99 verbunden. Anstatt dieser Passfederverbindung kann auch eine andere kraftschlüssige Verbindung, die insbesondere einen geriffelten, sternförmigen oder polygonalen, vorzugsweise drei-, vier- oder sechs-kantigen Querschnitt aufweist, zum Einsatz kommen. Die Abtriebs-Kupplung 98b wird von einem Federungs-Element 119 in Axialrichtung gegen den Reib-Belag 116 gepresst. Das Federungs-Element 119 umfasst mindestens eine, insbesondere mehrere, vorgespannte Federn, insbesondere Tellerfedern 120. Das Federungs-Element 119 liegt an seiner in Axialrichtung dem Reib-Belag 116 abgewandten Seite an einer Spann-Scheibe 121 an. Über die Ausdehnung der Spann-Scheibe 121 in Axialrichtung ist die Vorspannung des Federungs-Elements 119 und somit das über den Reib-Belag 116 maximal übertragbare Drehmoment beeinflussbar. Gegebenenfalls können auch mehrere Spann-Scheiben 121 vorgesehen sein.

Überschreitet das zwischen der antriebsseitigen Welle 76 und der abtriebsseitigen Welle 99 wirkende Drehmoment einen definierten Maximalbetrag, welcher insbesondere von der Vorspannung des Federungs-Elements 119 und den Eigenschaften des Reib-Belags 116 abhängig ist, so kommt es zu einer relativen Drehbewegung der Wellen 76, 99 bezüglich der Längsachse 2 zueinander. Der Reib-Belag 116 rutscht durch, das heißt die Kopplung zwischen der antriebsseitigen Welle 76 und der abtriebsseitigen Welle 99 ist unterbrochen.

Außerdem kommt es beim Einwirken von axialen Zugkräften auf die Welle 99 zu einer Verschiebung derselben in Axialrichtung gegen die Federkraft des Federungs-Elements 119. Das Federungs-Element 119 wird dadurch zusammengedrückt. Der reibschlüssige Kontakt zwischen der Abtriebs-Kupplung 98b und dem Reib-Belag 116 wird unterbrochen.

Selbstverständlich ist es ebenso möglich, die Welle 99 in Axialrichtung gegenüber dem Reib-Belag 116 festzulegen oder die Anordnung der Abtriebs-Kupplung 98b, des Federungs-Elements 119 und des Reib-Belags 116 derart zu modifizieren, dass die Abtriebs-Kupplung 98b bei Einwirken einer axialen Druckkraft auf die Welle 99 von der Antriebs-Kupplung 70b entkoppelt wird.

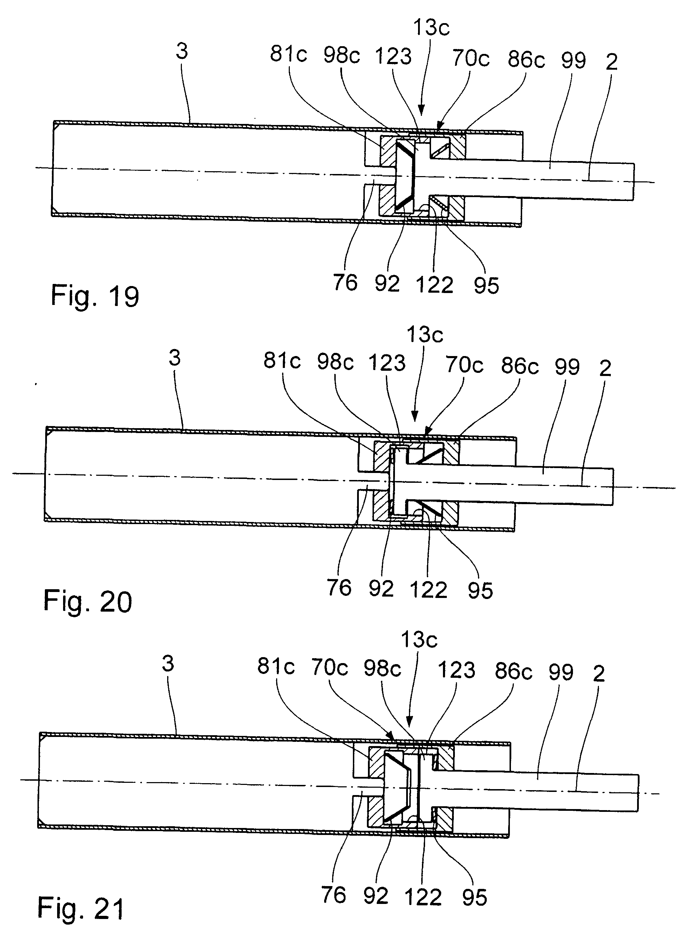

Im Folgenden wird unter Bezugnahme auf die Fig. 19 bis 21 ein viertes Ausführungsbeispiel der Überlast-Kupplung 13c beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c. Gemäß dem vierten Ausführungsbeispiel umfasst die Antriebs-Kupplung 70c die Antriebs-Hülse 81c, welche drehfest mit der Welle 76 verbunden ist. Außerdem umfasst die Antriebs-Kupplung 70c die dritte Kupplungs-Hülse 86c, welche zumindest in Axialrichtung gegen die Antriebs-Hülse 81c festlegbar ist. An ihrem der Antriebsseite abgewandten Ende weist die Antriebs-Hülse 81c ein der Längsachse 2 zugewandtes Mitnahme-Element 122 auf. Das Mitnahme-Element 122 steht gegenüber der Antriebs-Hülse 81c radial nach innen vor.

Das Mitnahme-Element 122 ist als Verzahnung auf der Innenseite der Antriebs-Hülse 81c ausgebildet. Alternativ hierzu kann das Mitnahme-Element 122 auch als Reib-Belag ausgebildet sein.

Die Abtriebs-Kupplung 98c, welche in Axialrichtung beidseitig von vorgespannten Federn 92, 95 gegen die Antriebs-Hülse 81c bzw. die dritte Kupplungs-Hülse 86c abgestützt ist, weist umfangsseitig eine zum Mitnahme-Element 122 passende Mitnahme-Kontur 123 auf. Die Mitnahme-Kontur 123 weist insbesondere eine formschlüssig zur Verzahnung des Mitnahme-Elements 122 passende Verzahnung auf.

In der Mittelstellung der Abtriebs-Kupplung 98c steht die Verzahnung der Mitnahme-Kontur 123 mit der Verzahnung des Mitnahme-Elements 122 in formschlüssigem Eingriff. Die Antriebs-Kupplung 70c ist somit in drehmomentübertragender Weise an die Abtriebs-Kupplung 98c gekoppelt. Im Fall einer auf die Welle 99 wirkenden Axialkraft wird die Abtriebs-Kupplung 98c gegen die Federkraft einer der Federn 92, 95 in Axialrichtung verschoben, wobei die Mitnahme-Kontur 123 außer Eingriff mit dem Mitnahme-Element 122 kommt. Sobald die Abtriebs-Kupplung 98c so weit in Axialrichtung gegen die Antriebs-Hülse 81c verschoben ist, dass die Mitnahme-Kontur 123 außer Eingriff mit dem Mitnahme-Element 122 steht, sind die Antriebs-Kupplung 70c und die Abtriebs-Kupplung 98c und somit die Wellen 76 und 99 voneinander entkoppelt.

Im Folgenden wird unter Bezugnahme auf die Fig. 23 ein fünftes Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten d. Der Unterschied zum ersten Ausführungsbeispiel besteht darin, dass der Elektro-Motor 7d gekapselt ausgebildet ist. Dies ermöglicht einen besonders einfachen Austausch des Elektro-Motors 7d. Zwischen dem Motorpolrohr 28 und dem Gehäuse 3 ist bei diesem Ausführungsbeispiel ein separates Zwischenrohr 133 vorgesehen.

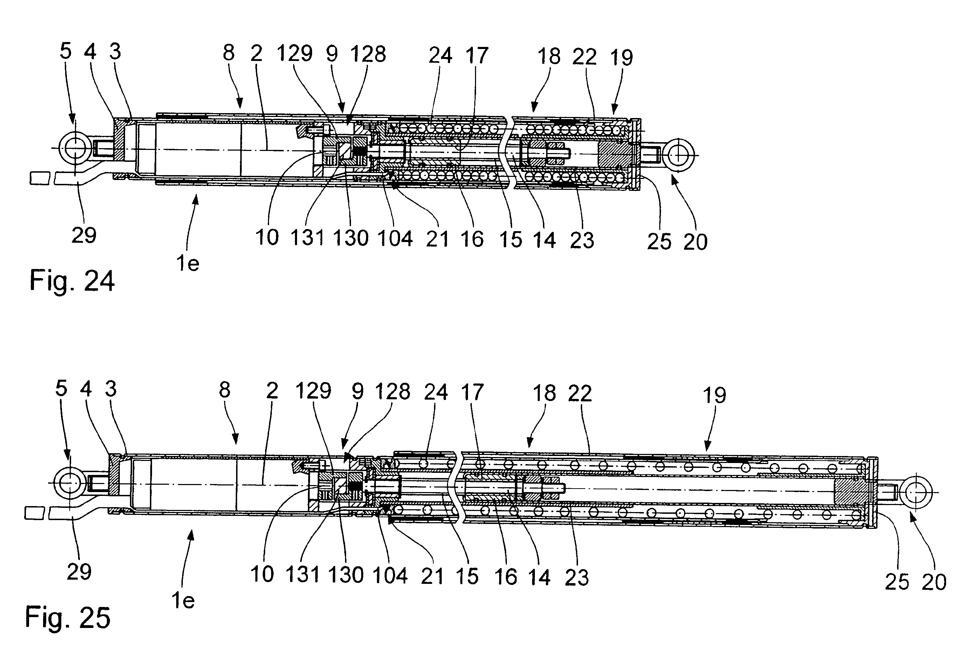

Im Folgenden wird unter Bezugnahme auf die Fig. 24 und 25 ein sechstes Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten e. Beim sechsten Ausführungsbeispiel ist der Spindel-Trieb 18 über eine elastische Kupplung 128 direkt an die Antriebs-Welle 10 gekoppelt. Die elastische Kupplung 128 umfasst zwei Kupplungsanbindungen 129, 130 und einen dazwischen liegenden, elastischen Zahnkranz 131. Der Zahnkranz 131 ist beispielsweise aus Kunststoff. Die erste Kupplungsanbindung 129 ist in drehmomentübertragender Weise, vorzugsweise starr, mit der Antriebs-Welle 10 der Antriebs-Einrichtung 8 verbunden. Die zweite Kupplungsanbindung 130 ist in drehmomentübertragender Weise, vorzugsweise starr, mit dem Spindel-Trieb 18 verbunden. Der zwischen diesen beiden starren Kupplungsanbindungen 129, 130 liegende, elastische Zahnkranz 131 gleicht koaxiale Versätze zwischen der Antriebs-Einrichtung 8 und dem Spindel-Trieb 18 aus. Des weiteren sorgt der Zahnkranz 131 für eine Körperschallentkopplung zwischen der Antriebseinrichtung 8 und dem Spindel-Trieb 18 was zu einer Geräuschpegelreduzierung führt.

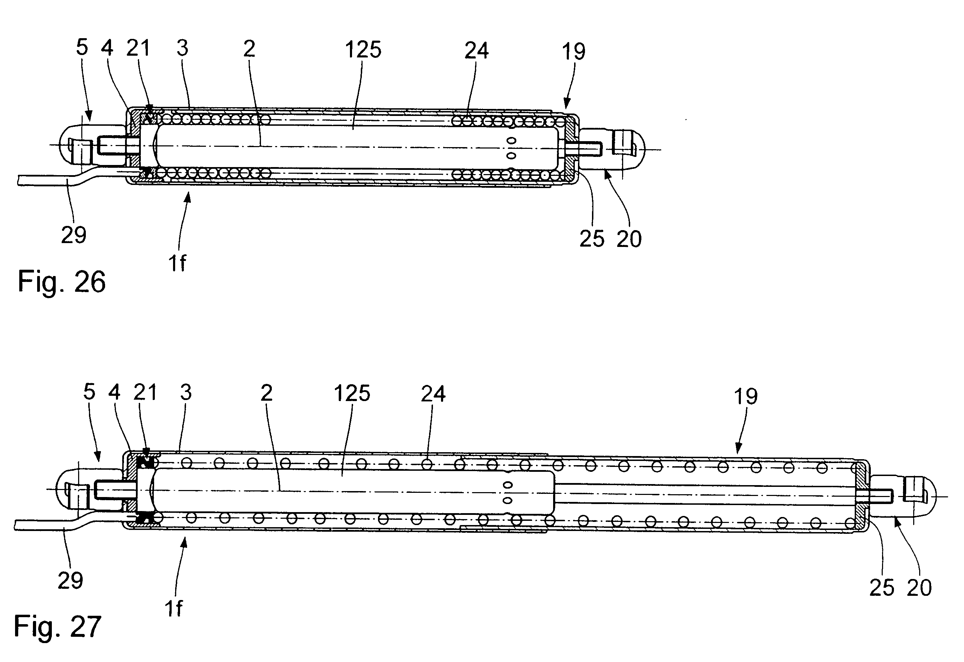

Im Folgenden wird unter Bezugnahme auf die Fig. 26 und 27 ein siebtes Ausführungsbeispiel der Erfindung beschrieben. Identische Teile erhalten dieselben Bezugszeichen wie bei dem sechsten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten f. Im Gegensatz zum sechsten Ausführungsbeispiel ist anstelle des an die Antriebs-Einrichtung 8 gekoppelten Spindel-Triebs 18 beim siebten Ausführungsbeispiel zum Verstellen des Verstell-Elements 19 eine Gasfeder 125 vorgesehen. Bezüglich des detaillierten Aufbaus der Gasfeder 125 sei auf die DE 103 30 176 A1 verwiesen. Die Ausfahrbarkeit des Verstell-Elements 19 wird auch beim siebten Ausführungsbeispiel durch die Schraubendruckfeder 24 unterstützt. Entsprechend dem vorbeschriebenen Ausführungsbeispiel ist auch beim siebten Ausführungsbeispiel der Sensor 21 zur Messung der von der Schraubendruckfeder 24 auf das Verstell-Element 19 ausgeübten Kraft und somit zur Ermittlung des Verfahrwegs des Betätigungs-Elements 1f vorgesehen.

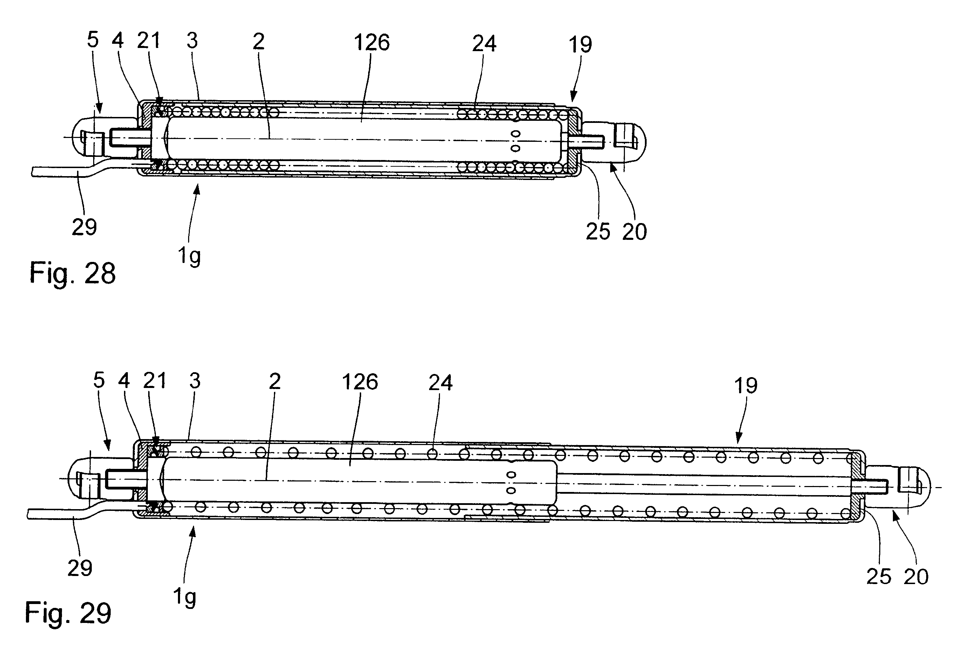

Im Folgenden wird unter Bezugnahme auf die Fig. 28 und 29 ein achtes Ausführungsbeispiel der Erfindung beschrieben. Identische Teile erhalten dieselben Bezugszeichen wie bei dem siebten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten g. Im Gegensatz zum siebten Ausführungsbeispiel ist nur die Schraubendruckfeder 24 zum Verstellen des Verstell-Elements 19 vorgesehen. Zur Dämpfung und/oder Blockierung des Verstell-Vorgangs ist ein Dämpf- und/oder Blockierelement 126 vorgesehen. Das Dämpf- und/oder Blockierelement 126 blockiert die von der Schraubenfeder 24 auf das Verstell-Element 19 ausgeübte Kraft entweder komplett oder bis zu einer definierten Kraftschwelle. Es kann entweder nur in einer Verfahrrichtung, in beide Verfahrrichtungen bei einer konstanten Kraftschwelle oder in beiden Verfahrrichtungen bei unterschiedlichen Kraftschwellen wirken. Das Dämpf- und/oder Blockierelement 126 kann eine Dämpffunktion auf den Verstell-Vorgang ausüben. Diese Funktion dämpft das Verfahren des Verstell-Elements 19 nach Überschreiten einer definierten Kraftschwelle. Ist in dem Betätigungs-Element 1g keine Blockierfunktion notwendig, und sind entsprechend keine Kraftschwellen definiert, so kann die Dämpffunktion unabhängig davon separat zum Einsatz kommen. Das Dämpfelement 126 kann dann entweder nur in eine Verfahrrichtung, in beide Verfahrrichtungen mit konstanter Dämpfkraft oder in beiden Verfahrrichtungen mit unterschiedlichen Dämpfkräften wirken. Entsprechend dem vorbeschriebenen Ausführungsbeispiel ist auch beim achten Ausführungsbeispiel der Sensor 21 zur Messung der von der Schraubendruckfeder 24 auf das Verstell-Element 19 ausgeübten Kraft und somit zur Ermittlung des Verfahrwegs des Betätigungs-Elements 1g vorgesehen.

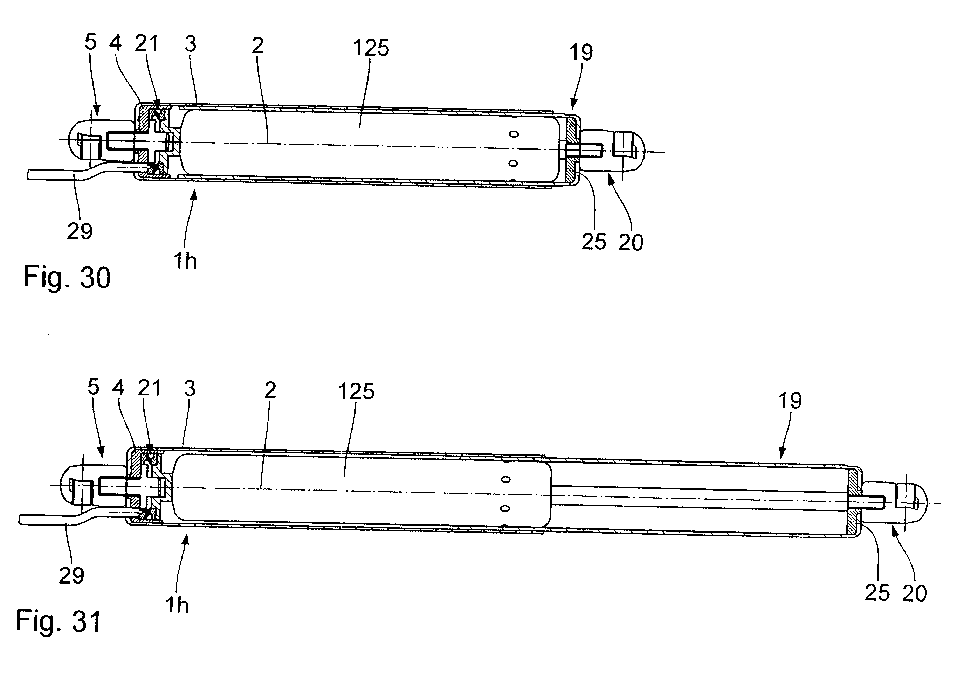

Bei einem neunten, in den Fig. 30 und 31 dargestellten Ausführungsbeispiel des Betätigungs-Elements 1h wird im Gegensatz zum siebten und achten Ausführungsbeispiel auf die Schraubendruckfeder 24 verzichtet. Im Übrigen wird für die Beschreibung des neunten Ausführungsbeispiels auf die des siebten und achten Ausführungsbeispiels verwiesen.

Es sei noch einmal allgemein darauf hingewiesen, dass der Sensor 21 in allen kraftunterstützten Betätigungs-Elementen 1 einsetzbar ist. Er ist, wie insbesondere aus dem neunten Ausführungsbeispiel ersichtlich ist, auf einfache Weise in bereits vorhandene Betätigungs-Elemente 1 nachrüstbar. Besonders vorteilhaft ist der Einsatz des Sensors 21 bei Betätigungs-Elementen 1, deren Verfahrweg mittels der Steuer-Einrichtung 31 steuerbar ist. In diesem Fall ist der Sensor 21 vorzugsweise direkt oder indirekt in datenübertragender Weise mit der Steuer-Einrichtung 31 verbunden. In diesem Fall wird mittels des Sensors 21 eine Rückkopplung des Verstell-Elements 19, insbesondere dessen Verfahrwegs, an die Steuer-Einrichtung 31 erreicht. Das Betätigungs-Element 1, insbesondere dessen Verstellbarkeit, ist somit regelbar.

Es ist selbstverständlich auch möglich, auf den Sensor 21 zu verzichten.

## Patentansprüche

1. Längenverstellbares Betätigungselement (1; 1a; 1b; 1c) mit
a. einem sich entlang einer Längsachse (2) erstreckenden Gehäuse (3),
b. einer Antriebs-Welle (10), welche
i. an eine Antriebs-Einrichtung (8) gekoppelt ist und
ii. mittels dieser um die Längsachse (2) drehantreibbar ist,
c. einem Spindel-Trieb (18) mit
i. einer Gewinde-Spindel (14) mit einem Außengewinde (15) und
ii. einer Spindel-Mutter (16) mit einem zum Außengewinde (15) passenden Innengewinde (17), und
d. einem mittels des Spindel-Triebs (18) in Richtung der LängsAchse (2) verschiebbaren Verstell-Element (19),
e. wobei die Antriebs-Einrichtung (8) selbst ein tragendes Element bildet,
f. wobei die Antriebs-Einrichtung (8) als Elektromotor (7) ausgebildet ist,
g. wobei der Elektromotor (7) ein Motorpolrohr (28) aufweist,
**dadurch gekennzeichnet, dass**
h. das Motorpolrohr (28) in Richtung der Längsachse (2) über ein am Elektromotor (7) angeordnetes Motoranschluss-Lagerschild (106) übersteht; und dass das Gehäuse (3) keine tragende Funktion hat.

2. Betätigungselement (1; 1a; 1b; 1c) gemäß Anspruch 1, **dadurch gekennzeichnet, dass** das Motorpolrohr (28) ein tragendes Element bildet.

3. Betätigungselement (1; 1a; 1b; 1c) gemäß Anspruch 1 oder 2, **dadurch gekennzeichnet, dass** das Motorpolrohr (28) vom Gehäuse (3) gebildet ist.

4. Betätigungselement (1; 1a; 1b; 1c) gemäß Anspruch 1 oder 2, **dadurch gekennzeichnet, dass** das Gehäuse (3) das Motorpolrohr (28) umhüllt.

5. Betätigungselement (1; 1a; 1b; 1c) gemäß einem der vorstehenden Ansprüche, **dadurch gekennzeichnet, dass** das Motorpolrohr (28) aus Metall hergestellt ist.

## Claims

1. Length-adjustable actuating element (1; 1a, 1b; 1c) comprising
a. a housing (3) extending along a longitudinal axis (2),
b. a drive shaft (10) which
i. is coupled to a drive device (8) and
ii. can be rotary-driven by means of the latter about the longitudinal axis (2)
c. a spindle drive (18) with
i. a threaded spindle (14) with an external thread (15) and
ii. a spindle nut (16) with an internal thread (17) corresponding with the external thread (15) and
d. an adjusting element (19) adjustable by means of the spindle drive (18) in the direction of the longitudinal axis (2),
e. wherein the drive device (8) itself forms a supporting element,
f. wherein the drive device (8) is configured as an electric motor (7),
g. wherein the electric motor (7) comprises a motor pole pipe (28), **characterised in that**
h. the motor pole pipe (28) projects in the direction of the longitudinal axis (2) over a motor connection bearing shield (106) arranged on the electric motor (7) and **in that** the housing (3) does not have a supporting function.

2. Actuating element (1; 1a; 1b; 1c) according to claim 1, **characterised in that** the motor pole pipe (28) forms a supporting element.

3. Actuating element (1; 1a; 1b; 1c) according to claim 1 or 2, **characterised in that** the motor pole pipe (28) is formed by the housing (3).

4. Actuating element (1; la; 1b; 1c) according to claim 1 or 2, **characterised in that** the housing (3) surrounds the motor pole pipe (28).

5. Actuating element (1; 1a; 1b; 1c) according any one of the preceding claims, **characterised in that** the motor pole pipe (28) is made of metal.

## Revendications

1. Actionneur réglable en longueur (1 ; 1a ; 1b ; 1c) comprenant
a. un carter (3) s'étendant le long d'un axe longitudinal (2),
b. un arbre d'entraînement (10) qui
i. est couplé à un système d'entraînement (8) et
ii. peut être entraîné en rotation autour de l'axe longitudinal (2) au moyen de celui-ci,
c. un pignon de broche (18) comportant
i. une broche filetée (14) comprenant un filetage externe (15) et
ii. un écrou de broche (16) comprenant un filetage interne (17) correspondant avec le filetage externe (15),
et
d. un élément de réglage (19) pouvant être déplacé dans la direction de l'axe longitudinal (2) au moyen du pignon de broche (18),
e. le système d'entraînement (8) constituant en lui-même un élément porteur,
f. le système d'entraînement (8) étant conçu sous la forme d'un moteur électrique (7),
g. le moteur électrique (7) présentant un tube polaire de moteur (28),
**caractérisé en ce que**
h. le tube polaire du moteur (28) dépasse d'une flasque-palier de raccordement moteur (106) disposée sur le moteur électrique (7) dans la direction de l'axe longitudinal (2) et que le carter (3) ne possède aucune fonction portante.

2. Actionneur (1 ; 1a ; 1b ; 1c) selon la revendication 1 **caractérisé en ce que** le tube polaire du moteur (28) constitue un élément porteur.

3. Actionneur (1 ; 1a ; 1b ; 1c) selon les revendications 1 ou 2 **caractérisé en ce que** le tube polaire du moteur (28) est formé par le carter (3).

4. Actionneur (1 ; 1a ; 1b ; 1c) selon les revendications 1 ou 2 **caractérisé en ce que** le carter (3) enveloppe le tube polaire du moteur (28).

5. Actionneur (1 ; 1a ; 1b ; 1c) selon l'une des revendications précédentes **caractérisé en ce que** le tube polaire du moteur (28) est fabriqué en métal.
